(19) Europäisches Patentamt
European Patent Office
Office européen des brevets

(11) EP 4 613 496 A1

(12) EUROPEAN PATENT APPLICATION

(43) Date of publication:
**10.09.2025 Bulletin 2025/37**

(21) Application number: **25159855.3**

(22) Date of filing: **25.02.2025**

(51) International Patent Classification (IPC):
***B41M 1/26*** *(2006.01)* ***B41M 3/00*** *(2006.01)*
***B41M 5/00*** *(2006.01)* ***C09D 11/00*** *(2014.01)*
*B41M 1/18* *(2006.01)*

(52) Cooperative Patent Classification (CPC):
**B41M 5/0011; B41M 1/26; B41M 3/008; C09D 11/00;** B41M 1/18; B41M 5/0047; B41M 5/0064; B41M 5/007

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.02.2024 JP 2024029826**

(71) Applicant: **Ricoh Company, Ltd.**
**Tokyo 143-8555 (JP)**

(72) Inventors:
- **HANAZAWA, Atsufumi**
  **Tokyo, 143-8555 (JP)**
- **INOUE, Tomohiro**
  **Tokyo, 143-8555 (JP)**
- **TAMAI, Takashi**
  **Tokyo, 143-8555 (JP)**
- **HASEGAWA, Shin**
  **Tokyo, 143-8555 (JP)**

(74) Representative: **SSM Sandmair Patentanwälte Rechtsanwalt Partnerschaft mbB**
**Joseph-Wild-Straße 20**
**81829 München (DE)**

# (54) PRINTING METHOD, INK SET, AND METHOD OF MANUFACTURING PRINTED MATTER

(57) A printing method is provided that includes depositing, on an object to be coated, a first liquid having a viscosity of $1.00 \times 10^3$ mPa·s or more at a shear rate of 1 $s^{-1}$ at 25°C and a viscosity of $3.50 \times 10^2$ mPa·s or less at a shear rate of 5,000 $s^{-1}$ at 25°C, and performing printing by discharging a second liquid from a nozzle onto the first liquid deposited on the object to be coated.

EP 4 613 496 A1

## Description

BACKGROUND

Technical Field

The present disclosure relates to a printing method, an ink set, and a method of manufacturing a printed matter.

Related Art

In a known inkjet printing method, different types of ink are layered to form an image on a recording medium. For example, when printing labels for bottles, if the bottle or the content has a dark color, color ink is combined with white ink to provide concealing properties and prevent the color of the bottle or the content from showing through the label. Thus, the color of the bottle or the content is prevented from showing through the label and ruining the appearance of the design. In printing on fabrics, the color of the fabric is concealed with white ink and then, printing with color inks is performed to realize color graphics (see, for example, Japanese Patent No. 5337351).

However, when such a conventional ink is used to coat the exterior or interior of buildings, floors, and road surfaces, if a base material of an object to be coated has dark color, irregularities, or a porous shape, an ink that conceals the object to be coated may be printed on the object to be coated, and then, a different ink may be printed on top of the ink that conceals the object to be coated. In such a case, it may not be possible to form a thick film of the ink concealing the object to be coated, and the color of the object to be coated may not be sufficiently concealed. Further, when a different ink is printed on top of the ink that conceals the object to be coated, the ink may bleed.

SUMMARY

An object of the present invention is to provide a printing method that suppresses bleeding of a liquid deposited on an object to be coated.

A printing method according to one embodiment of the present invention includes depositing, on an object to be coated, a first liquid having a viscosity of $1.00 \times 10^3$ mPa·s or more at a shear rate of 1 $s^{-1}$ at 25°C and a viscosity of $3.50 \times 10^2$ mPa·s or less at a shear rate of 5,000 $s^{-1}$ at 25°C, and performing printing by discharging a second liquid from a nozzle onto the first liquid deposited on the object to be coated.

According to one embodiment of the present invention, a printing method is provided that suppresses bleeding of a liquid deposited on an object to be coated.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a schematic side view of a liquid discharge apparatus as a printing apparatus according to one embodiment of the present invention;
FIG. 2 is a schematic plan view of a liquid discharge apparatus as a printing apparatus according to one embodiment of the present invention;
FIG. 3 is a schematic diagram illustrating a state where an inkjet nozzle is closed in a printing apparatus according to one embodiment of the present invention; and
FIG. 4 is a schematic diagram illustrating a state where an inkjet nozzle is open in a printing apparatus according to one embodiment of the present invention.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to

be understood that each specific element includes all technical equivalents that have a similar function, operate in a similar manner, and achieve a similar result.

Referring now to the drawings, embodiments of the present disclosure are described below. As used herein, the singular forms "a", "an", and "the" are intended to include the plural forms as well, unless the context clearly indicates otherwise.

(Printing Method and Printing Apparatus)

A printing method according to one embodiment of the present invention includes a first step and a second step, and may further include other steps, if desired.

A printing apparatus according to one embodiment of the present invention includes a first unit and a second unit, and may further include other units, if desired.

The first step can be implemented by the first unit, and the second step can be implemented by the second unit.

By using the printing method according to one embodiment of the present invention, bleeding of a liquid deposited on an object to be coated can be suppressed. In particular, when coating the exterior and interior of buildings, floors, and road surfaces, an ink or paint that conceals an object to be coated may be printed or painted on a base material of an object to be coated having a dark color, a base material having irregularities, or a porous base material. Subsequently, a different ink may be printed on top of the ink or the paint that conceals the object to be coated. In such a case, it is possible to form a thick film of the ink or the paint concealing the object to be coated, to sufficiently conceal the color of the object to be coated, and perform printing while suppressing bleeding of the ink when a different ink is printed on the ink concealing the object to be coated.

<First Step and First Unit>

The first step is a step of depositing, on an object to be coated, a first liquid having a viscosity of $1.00\times10^3$ mPa·s or more at a shear rate of 1 $s^{-1}$ at 25°C and a viscosity of $3.50\times10^2$ mPa·s or less at a shear rate of 5,000 $s^{-1}$ at 25°C.

The first unit is a unit used for depositing, on an object to be coated, a first liquid having a viscosity of $1.00\times10^3$ mPa·s or more at a shear rate of 1 $s^{-1}$ at 25°C and a viscosity of $3.50\times10^2$ mPa·s or less at a shear rate of 5,000 $s^{-1}$ at 25°C.

The first step can be implemented by the first unit.

The method of depositing the liquid is not particularly limited and can be appropriately selected according to a purpose. Examples of the method include an inkjet method, a spray method, and a brush coating method.

<<First Liquid>>

The first liquid is not particularly limited and can be appropriately selected according to a purpose, as long as the first liquid has a viscosity of $1.00\times10^3$ mPa·s or more at a shear rate of 1 $s^{-1}$ at 25°C and a viscosity of $3.50\times10^2$ mPa·s or less at a shear rate of 5,000 $s^{-1}$ at 25°C. Examples of the first liquid include, but are not limited to, ink, paint, and a treatment liquid.

The ink is not particularly limited, can be appropriately selected according to a purpose, and examples thereof include white ink, transparent ink, and color ink. Among these, white ink is preferred, because white ink has excellent concealing properties.

The viscosity of the first liquid at a shear rate of 1 $s^{-1}$ at 25°C is $1.00\times10^3$ mPa·s or more, preferably $1.00\times10^3$ mPa·s or more and $3.00\times10^4$ mPa·s or less, more preferably $3.00\times10^3$ mPa·s or more and $2.50\times10^4$ mPa·s or less, even more preferably $6.00\times10^3$ mPa·s or more and $2.00\times10^4$ mPa·s or less, and particularly preferably $7.00\times10^3$ mPa·s or more and $2.00\times10^4$ mPa·s or less. When the viscosity of the first liquid at a shear rate of 1 $s^{-1}$ at 25°C is $1.00\times10^3$ mPa·s or more, the viscosity of the ink of the first liquid increases after the first liquid is applied to asphalt on a road surface or the like. Therefore, the first liquid is less likely to penetrate into the road surface, so that the coating film is thicker and the concealing properties are improved. Further, when the viscosity of the first liquid at a shear rate of 1 $s^{-1}$ at 25°C is $3.00\times10^4$ mPa·s or less, the discharge stability when the first liquid is applied by an inkjet method is improved.

The viscosity of the first liquid at a shear rate of 0.1 $s^{-1}$ at 25°C is preferably $3.00\times10^4$ mPa·s or more, and is more preferably $3.00\times10^4$ mPa·s or more and $1.50\times10^5$ mPa·s or less. When the viscosity of the first liquid at a shear rate of 0.1 $s^{-1}$ at 25°C is $3.00\times10^4$ mPa·s or more, the viscosity of the ink of the first liquid increases after the first liquid is applied to asphalt on a road surface or the like. Therefore, the first liquid is less likely to penetrate into the road surface, so that the coating film is thicker and the concealing properties are improved. Further, when the viscosity of the first liquid at a shear rate of 0.1 $s^{-1}$ at 25°C is $1.50\times10^5$ mPa·s or less, the discharge stability is improved when the first liquid is applied by an inkjet method.

The viscosity of the first liquid at a shear rate of 5,000 $s^{-1}$ at 25°C is $3.50\times10^2$ mPa·s or less, preferably $3.00\times10^2$ mPa·s or less, more preferably $1.30\times10^2$ mPa·s or less, and particularly preferably $3.0\times10$ mPa·s or more and $8.0\times10$

mPa·s or less. When the viscosity of the first liquid at a shear rate of 5,000 $s^{-1}$ at 25°C is $3.50 \times 10^2$ mPa·s or less, the discharge stability is improved when the first liquid is applied by an inkjet method, and the first liquid can be applied evenly when the first liquid is applied by a spray method.

A method of measuring the viscosity of the first liquid at 25°C at a shear rate of 1 $s^{-1}$, a shear rate of 0.1 $s^{-1}$, and a shear rate of 5,000 $s^{-1}$ is not particularly limited and can be appropriately selected according to a purpose. For example, a cone plate (cone radius: 25 mm, cone angle: 1°) in an MCR 301 (manufactured by Anton Parr GmbH) may be used to measure the viscosity.

The first liquid contains a thickener, a resin, and a solvent, preferably contains a surfactant and a coloring material, and if desired, further contains other components.

- Thickener -

The "thickening property" of the thickener refers to a property by which, in a solution such as ink containing particles, the viscosity increases when the shear rate is decreased by adding the particles to the solution, and the viscosity decreases when the shear rate is increased. When 60 g of the thickener are dispersed in 100 mL of water at 25°C, the viscosity at a shear rate of 0.1 $s^{-1}$ is 100 mPa·s or more and 900,000 mPa·s or less, and the viscosity at a shear rate of 5,000 $s^{-1}$ is 1 mPa·s or more and 200 mPa·s or less. Further, the viscosity increases when the shear rate is decreased, and the viscosity decreases when the shear rate is increased.

When the first liquid contains a thickener, the viscosity of the ink can be controlled in accordance with the shear rate. Specifically, by controlling the viscosity at a shear rate of 1 $s^{-1}$ at 25°C to obtain a viscosity of $1.00 \times 10^3$ mPa·s or more, a thick coating film can be formed, and the coating film has excellent concealing properties for the object to be coated. Further, by controlling the viscosity at a shear rate of 5,000 $s^{-1}$ at 25°C to obtain a viscosity of $3.50 \times 10^2$ mPa·s or less, the discharge stability is improved when the first liquid is applied by an inkjet method.

Coating films that are resistant to impact and abrasion are desirably used for road surfaces, wall surfaces of buildings such as exterior and interior walls, and wall surfaces of civil engineering structures such as bridges and tunnels. Therefore, it is preferable to provide a thickener to form a coating film that is highly robust and resistant to impact and abrasion.

The thickener is not particularly limited and can be appropriately selected according to a purpose. Examples of the thickener include, but are not limited to, inorganic thickeners and organic thickeners.

Examples of inorganic thickeners include, but are not limited to, fumed silica, precipitated silica, clay minerals, talc, calcium carbonate, barium sulfate, and polyethylene oxide.

Examples of organic thickeners include, but are not limited to, wax-based thickeners, cellulose-based thickeners, polyurethane-based thickeners, and polyacrylic-acid-based thickeners. Examples of the wax-based thickeners include, but are not limited to, hydrogenated castor oil-based thickeners, polyethylene oxide-based thickeners, amide-based thickeners, and polyether-based thickeners. Examples of the cellulose-based thickeners include, but are not limited to, carboxymethyl cellulose, hydroxyethyl cellulose, and ethyl cellulose.

Examples of the polyurethane-based thickeners include, but are not limited to, polyether-modified urethane compounds, hydrophobically modified polyoxyethylene, and polyurethane copolymers. Examples of the polyacrylic-acid-based thickeners include, but are not limited to, polyacrylates and acrylic acid-methacrylic acid copolymers.

These thickeners may be used alone or in combination of two or more types. Among these, calcium carbonate and talc are preferably used to obtain a robust ink coating film.

The clay minerals are not particularly limited and can be appropriately selected according to a purpose. Examples of the clay minerals include, but are not limited to, diatomaceous earth, bentonite, sepiolite, kaolinite, montmorillonite, sericite, and illite. Among these clay minerals, diatomaceous earth, bentonite, and sepiolite are preferred.

The type of calcium carbonate is not particularly limited and may be appropriately selected according to a purpose. For example, commercially available products can be used. The commercially available products of calcium carbonate are not particularly limited, may be appropriately selected according to a purpose, and examples thereof include, but are not limited to, UP-G (manufactured by Imerys Specialties Japan Co., Ltd., solid content 100%), LUMINOUS (manufactured by Maruo Calcium Co., Ltd., solid content 100%) CALTEX 5 (manufactured by Maruo Calcium Co., Ltd., solid content 100%), SUPER #2000 (manufactured by Maruo Calcium Co., Ltd., solid content 100%), SUPER SSS (Maruo Calcium Co., Ltd., solid content 100%), SOFTON 1500 (Bihoku Funka Kogyo Co., Ltd., solid content 100%), SOFTON 3200 (Bihoku Funka Kogyo Co., Ltd., solid content 100%), BF100 (Bihoku Funka Kogyo Co., Ltd., solid content 10%), and LIGHTON A-5 (Bihoku Funka Kogyo Co., Ltd., solid content 100%).

The type of talc is not particularly limited and may be appropriately selected according to a purpose. For example, commercially available products can be used. The commercially available products of talc are not particularly limited and may be appropriately selected according to a purpose. Examples of the commercially available products include, but are not limited to, NANO ACE D-600 (Nippon Talc Co., Ltd., solid content 100%).

The shape of the thickener is not particularly limited and can be appropriately selected according to a purpose.

However, the thickener is preferably in the form of particles, because in this case, the storage stability is good when the thickener is used as a liquid such as ink and paint.

Moreover, a mixed crystal may be used as the thickener.

The thickener may be used in combination with a thickener that is not in the form of particles. Examples of the thickener that is not in the form of particles include, but are not limited to, resin-like thickeners that dissolve in the paint to exhibit an effect of a "thickening property".

The content of the thickener in the form of particles is not particularly limited and can be appropriately selected according to a purpose. However, the content is preferably 20.0 mass% or more and 55.0 mass% or less with respect to the total amount of the first liquid, and is more preferably 30.0 mass% or more and 40.0 mass% or less, because in this case, it is possible to impart excellent abrasion resistance and mechanical strength, to further suppress bleeding, and to provide excellent discharge stability when the first liquid is applied by an inkjet method. When the content of the thickener is 20.0 mass% or more and 55.0 mass% or less, the viscosity of the first liquid can be more easily controlled.

The content of the thickener that is not in the form of particles is not particularly limited and can be appropriately selected according to a purpose. However, the content is preferably 0.1 mass% or more and 20.0 mass% or less, and more preferably 0.1 mass% or more and 5.0 mass% or less, with respect to the total amount of the first liquid, because in this case, the thickener can be more easily dissolved in the ink or paint.

- Resin -

The resin contained in the first liquid is not particularly limited and can be appropriately selected according to a purpose. Examples of the resin include, but are not limited to, urethane resins, polyester resins, acrylic resins, vinyl acetate resins, styrene resins, butadiene resins, styrene-butadiene resins, vinyl chloride resins, acrylic-styrene resins, and acrylic-silicone resins. These resins may be used alone or in combination of two or more types.

Note that resin particles formed of these resins may be used as the resin, and the ink may be obtained by dispersing the resin particles in a solvent as a dispersion medium to form a resin emulsion, and mixing the resin emulsion with materials such as coloring materials and organic solvents.

The resin particles may be appropriately synthesized, or a commercially available product may be used as the resin particles. These resin particles may be used alone or in combination of two or more types of resin particles.

The glass transition temperature of the resin is not particularly limited and can be appropriately selected according to a purpose. However, from the viewpoint of suppressing cracking of the coating film when a thick coating film is used, the glass transition temperature is preferably 15°C or lower, and more preferably 0°C or lower.

A method of measuring the glass transition temperature is not particularly limited and can be appropriately selected according to a purpose. For example, in a resin emulsion, the glass transition temperature may be determined as follows.

Specifically, 4 g of the resin emulsion is filled into a petri dish made of a tetrafluoroethylene/perfluoroalkyl vinyl ether copolymer (PFA) having a diameter of 50 mm and the resin emulsion is spread evenly and dried at 50°C for one week to obtain a resin film. 5.0 mg of the obtained resin film is filled into a sample container made of aluminum, and the sample container is placed on a holder unit and set in an electric furnace.

Next, in a nitrogen atmosphere, the temperature is raised from 0°C to 150°C at a temperature increase rate of 10°C/min, then lowered from 150°C to -80°C at a cooling rate of 5°C/min, and afterwards, raised again to 150°C at a temperature increase rate of 10°C/min, to obtain a DSC curve.

An analysis program of a DSC-60 system is used to analyze, from the obtained DSC curve, an inflection part during the second temperature increase by the midpoint method to determine the glass transition temperature (Tg).

The content of the resin is not particularly limited and can be appropriately selected according to a purpose. However, the content is preferably 5 mass% or more and 30 mass% or less with respect to the total amount of the first liquid, to obtain a coating film having excellent robustness. Note that the content expresses the solid content of the resin.

A ratio (A/B) between the content (A) of the thickener in the form of particles and the content (B) of the resin is not particularly limited and can be appropriately selected according to a purpose. However, the ratio is preferably 0.8 or more, more preferably 1.0 or more, and even more preferably 1.5 or more. The ratio is particularly preferably 2.3 or more and 3.0 or less, because in this case, it is possible to further suppress bleeding. When the ratio (A/B) is 0.8 or more, excellent discharge stability is obtained, and excellent concealing properties for the base material are achieved by forming a thick coating film.

- Solvent -

The solvent contained in the first liquid is not particularly limited and can be appropriately selected according to a purpose. Examples of the solvent include, but are not limited to, organic solvents and water.

The organic solvent is not particularly limited and can be appropriately selected according to a purpose.

Examples of the organic solvent include, but are not limited to, ethers such as polyhydric alcohol alkyl ethers and polyhydric alcohol aryl ethers, polyhydric alcohols, heterocyclic compounds containing nitrogen, amides, amines, compounds containing sulfur, propylene carbonate, and ethylene carbonate.

The polyhydric alcohols are not particularly limited and can be appropriately selected according to a purpose. However, dihydric alcohols and trihydric alcohols may be used, because these polyhydric alcohols function as wetting agents and provide excellent discharge stability.

Examples of the dihydric alcohols include, but are not limited to, ethylene glycol, diethylene glycol, 1,2-propanediol, 1,3-propanediol, 1,2-butanediol, 1,3-butanediol, 1,4-butanediol, 2,3-butanediol, 3-methyl-1,3-butanediol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, and 1,5-hexanediol.

Examples of the trihydric alcohols include, but are not limited to, glycerin, 1,2,6-hexanetriol, 2-ethyl-1,3-hexanediol, ethyl-1,2,4-butanetriol, 1,2,3-butanetriol, 2,2,4-trimethyl-1,3-pentanediol, and petriol.

The polyhydric alcohol alkyl ethers are not particularly limited and can be appropriately selected according to a purpose. Examples of the polyhydric alcohol alkyl ethers include, but are not limited to, ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, and propylene glycol monoethyl ether.

The polyhydric alcohol aryl ethers are not particularly limited and can be appropriately selected according to a purpose. Examples of the polyhydric alcohol aryl ethers include, but are not limited to, ethylene glycol monophenyl ether and ethylene glycol monobenzyl ether.

The heterocyclic compounds containing nitrogen are not particularly limited and can be appropriately selected according to a purpose. Examples of the heterocyclic compounds containing nitrogen include, but are not limited to, 2-pyrrolidone, N-methyl-2-pyrrolidone, N-hydroxyethyl-2-pyrrolidone, 1,3-dimethyl-2-imidazolidinone, ε-caprolactam, and γ-butyrolactone.

The amides are not particularly limited and can be appropriately selected according to a purpose. Examples of the amides include, but are not limited to, formamide, N-methylformamide, N,N-dimethylformamide, 3-methoxy-N,N-dimethylpropionamide, and 3-butoxy-N,N-dimethylpropionamide.

The amines are not particularly limited and can be appropriately selected according to a purpose. Examples of the amines include, but are not limited to, monoethanolamine, diethanolamine, and triethylamine.

The compounds containing sulfur are not particularly limited, can be appropriately selected according to a purpose, and examples thereof include, but are not limited to, dimethyl sulfoxide, sulfolane, and thiodiethanol.

The content of the organic solvent is not particularly limited and can be appropriately selected according to a purpose. However, the content is preferably 7.0 mass% or less and more preferably 5.0 mass% or less, with respect to the total amount of the first liquid, to obtain excellent drying properties.

The content of water is not particularly limited and can be appropriately selected according to a purpose. However, considering the drying properties and the discharge reliability of the ink, the content of water is preferably 10 mass% or more and 90 mass% or less, and more preferably 20 mass% or more and 60 mass% or less, with respect to the total amount of the first liquid.

- Surfactant -

The surfactant contained in the first liquid is not particularly limited and can be appropriately selected according to a purpose. Examples of the surfactant include, but are not limited to, silicone-based surfactants, fluorine-based surfactants, amphoteric surfactants, nonionic surfactants, and anionic surfactants. These surfactants may be used alone or in combination of two or more types.

The silicone-based surfactants are not particularly limited and can be appropriately selected according to a purpose. Among these, silicone-based surfactants that do not decompose even at high pH are preferred. Examples thereof include, but are not limited to, polydimethylsiloxane modified in a side chain, polydimethylsiloxane modified at both ends, polydimethylsiloxane modified at one end, and polydimethylsiloxane modified at both side chain ends. Silicone-based surfactants having a polyoxyethylene group or a polyoxyethylene polyoxypropylene group as the modified group have excellent properties as aqueous surfactants and thus are preferably used. Further, a polyether-modified silicone surfactant can also be used as the silicone surfactant, and examples thereof include, but are not limited to, a compound obtained by introducing a polyalkylene oxide structure into the side chain of the Si moiety of dimethylsiloxane.

The silicone-based surfactant may be appropriately synthesized, or a commercially available product may be used as the silicone-based surfactant.

The commercially available product is not particularly limited and can be appropriately selected according to a purpose. Examples of the commercially available product include, but are not limited to, products available from BYK-Chemie GmbH, Shin-Etsu Chemical Co., Ltd., Toray Dow Corning Silicone Co., Ltd., Nihon Emulsion Co., Ltd., and Kyoeisha Chemical.

The polyether-modified silicone-based surfactant is not particularly limited and can be appropriately selected according to a purpose. Examples thereof include, but are not limited to, a surfactant obtained by introducing a polyalkylene oxide structure expressed by General Formula (S-1) below into the side chain of the Si moiety of dimethylpolysiloxane.

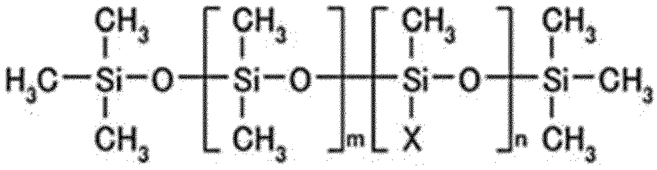 General Formula (S-1)

$$x = -R(C_2H_4O)_a\ (C_3H_6O)_b\ R'$$

(in General Formula (S-1), m, n, a, and b each independently represent an integer, R represents an alkylene group, and R' represents an alkyl group)

A commercially available product may be used as the polyether-modified silicone-based surfactant.

The commercially available product used as the polyether-modified silicone-based surfactant is not particularly limited and may be appropriately selected according to a purpose. Examples thereof include, but are not limited to, KF-618, KF-642, and KF-643 (manufactured by Shin-Etsu Chemical Co., Ltd.), EMALEX-SS-5602 and SS-1906EX (manufactured by Nihon Emulsion Co., Ltd.), FZ-2105, FZ-2118, FZ-2154, FZ-2161, FZ-2162, FZ-2163, and FZ-2164 (manufactured by Dow Corning Toray Silicone Co., Ltd.), BYK-33 and BYK-387 (manufactured by BYK-Chemie GmbH), and TSF4440, TSF4452, and TSF4453 (manufactured by Toshiba Silicones).

The fluorine-based surfactants are not particularly limited and can be appropriately selected according to a purpose. However, from the viewpoint of low foamability, it is preferable to use perfluoroalkyl sulfonic acid compounds, perfluoroalkyl carboxylic acid compounds, perfluoroalkyl phosphate ester compounds, perfluoroalkyl ethylene oxide adducts, and polyoxyalkylene ether polymer compounds having a perfluoroalkyl ether group in a side chain. These surfactants may be used alone or in combination of two or more types.

The perfluoroalkyl sulfonic acid compounds are not particularly limited and can be appropriately selected according to a purpose. Examples thereof include, but are not limited to, perfluoroalkyl sulfonic acid and perfluoroalkylsulfonic acid salts.

The perfluoroalkyl carboxylic acid compounds are not particularly limited and can be appropriately selected according to a purpose. Examples thereof include, but are not limited to, perfluoroalkyl carboxylic acid and perfluoroalkyl carboxylic acid salts.

The polyoxyalkylene ether polymer compounds having a perfluoroalkyl ether group in a side chain are not particularly limited and can be appropriately selected according to a purpose. Examples thereof include, but are not limited to, sulfate ester salts of polyoxyalkylene ether polymers having a perfluoroalkyl ether group in a side chain, and salts of polyoxyalkylene ether polymers having a perfluoroalkyl ether group in a side chain.

Counter ions of the salts in the fluorine-based surfactants are not particularly limited and can be appropriately selected according to a purpose. Examples of the counter ions include, but are not limited to, Li, Na, K, $NH_4$, $NH_3CH_2CH_2OH$, $NH_2(CH_2CH_2OH)_2$, and $NH(CH_2CH_2OH)_3$.

The fluorine-based surfactants are not particularly limited and can be appropriately selected according to a purpose. However, the fluorine-based surfactant is preferably a compound having 2 to 16 fluorine-substituted carbon atoms, and more preferably a compound having 4 to 16 fluorine-substituted carbon atoms.

Examples of the fluorine-based surfactants include, but are not limited to, perfluoroalkyl phosphate ester compounds, perfluoroalkyl ethylene oxide adducts, and polyoxyalkylene ether polymer compounds having a perfluoroalkyl ether group in a side chain. Among these fluorine-based surfactants, from the viewpoint of low foamability, the polyoxyalkylene ether polymer compounds having a perfluoroalkyl ether group in a side chain are preferred, and in particular, fluorine-based surfactants expressed by General Formula (F-1) and General Formula (F-2) are preferred.

$$CF_3CF_2(CF_2CF_2)_m\text{-}CH_2CH_2O(CH_2CH_2O)_n\,H \qquad \text{General Formula (F-1)}$$

(in General Formula (F-1), m and n each independently represent an integer)

In the compound expressed by General Formula (F-1), to impart water solubility, m is preferably an integer from 0 to 10 and n is preferably an integer from 0 to 40.

$$C_nF_{2n+1}\text{-}CH_2CH(OH)CH_2\text{-}O\text{-}(CH_2CH_2O)_a\text{-}Y \qquad \text{General Formula (F-2)}$$

(in General Formula (F-2), Y represents H, $C_mF_{2m+1}$ (m being an integer from 1 to 6), $CH_2CH(OH)CH_2$-$C_mF_{2m+1}$ (m being an integer from 4 to 6), or $C_pH_{2p+1}$ (p being an integer from 1 to 19), n represents an integer from 1 to 6, and a represents an integer from 4 to 14)

The fluorine-based surfactant may be appropriately synthesized, or a commercially available product may be used as the fluorine-based surfactant.

The commercially available product is not particularly limited and can be appropriately selected according to a purpose. Examples of the commercially available product include, but are not limited to, SURFLON (registered trademark) S-111, S-112, S-113, S-121, S-131, S-132, S-141, and S-145 (all manufactured by AGC Seimi Chemical Co., Ltd.); FULLARD FC-93, FC-95, FC-98, FC-129, FC-135, FC-170C, FC-430, and FC-431 (all manufactured by Sumitomo 3M Limited); MEGAFACE F-470, F-1405, and F-474 (all manufactured by DIC Corporation); ZONYL (registered trademark) TBS, FSP, FSA, FSN-100, FSN, FSO-100, FSO, FS-300, and UR, CAPSTONE FS-30, FS-31, FS-3100, FS-34, and FS-35 (all manufactured by Chemours Co., Ltd.); FTERGENT (FT)-110, FT-250, FT-251, FT-400S, FT-150, and FT-400SW (all manufactured by Neos Co., Ltd.), POLYFOX (PF)-136A, PF-156A, PF-151N, PF-154, and PF-159 (all manufactured by Omnova Co., Ltd.), and UNIDYNE DSN-403N (manufactured by Daikin Industries, Ltd.). Among these commercially available products, FS-3100, FS-34, and FS-300 manufactured by Chemours Co., Ltd., FT-110, FT-250, FT-251, FT-400S, FT-150, and FT-400SW manufactured by Neos Co., Ltd., PF-151N manufactured by Omnova Co., Ltd., and UNIDYNE DSN-403N manufactured by Daikin Industries, Ltd. provide excellent printing quality, and in particular, remarkably improve the color development, the permeability of paper, the wettability, and uniform dyeing properties, and thus are particularly preferred.

The amphoteric surfactants are not particularly limited and can be appropriately selected according to a purpose. Examples of the amphoteric surfactants include, but are not limited to, lauryl aminopropionate, lauryl dimethyl betaine, stearyl dimethyl betaine, and lauryl dihydroxyethyl betaine. These surfactants may be used alone or in combination of two or more types.

The nonionic surfactants are not particularly limited and can be appropriately selected according to a purpose. Examples of the nonionic surfactants include, but are not limited to, polyoxyethylene alkylphenyl ethers, polyoxyethylene alkyl esters, polyoxyethylene alkyl amines, polyoxyethylene alkyl amides, polyoxyethylene-propylene block polymers, sorbitan fatty acid esters, polyoxyethylene sorbitan fatty acid esters, and ethylene oxide adducts of acetylene alcohol. These surfactants may be used alone or in combination of two or more types.

The anionic surfactants are not particularly limited and can be appropriately selected according to a purpose. Examples of the anionic surfactants include, but are not limited to, polyoxyethylene alkyl ether acetate, dodecylbenzene sulfonate, laurate, and salts of polyoxyethylene alkyl ether sulfate.

These surfactants may be used alone or in combination of two or more types.

The content of the surfactant is not particularly limited and can be appropriately selected according to a purpose. However, to achieve excellent wettability and discharge stability and improve the image quality, the content of the surfactant is preferably 0.001 mass% or more and 5 mass% or less, and more preferably, 0.05 mass% or more and 5 mass% or less, with respect to the total amount of the first liquid.

- Coloring Material -

The coloring material contained in the first liquid is not particularly limited, can be appropriately selected according to a purpose, and examples thereof include pigments and dyes.

The first liquid may contain a coloring material to conceal the color of the object to be coated, or may be transparent and not contain a coloring material, so that the color of the object to be coated remains unchanged.

The pigments are not particularly limited and can be appropriately selected according to a purpose. Examples of the pigments include, but are not limited to, black pigments, yellow pigments, magenta pigments, cyan pigments, white pigments, green pigments, orange pigments, glossy color pigments such as gold pigments and silver pigments, and metallic pigments. Among these, white pigments are preferred, because white pigments can conceal the color of the object to be coated and the like.

Examples of the pigments include, but are not limited to, inorganic pigments and organic pigments. These pigments may be used alone or in combination of two or more types. Moreover, a mixed crystal may be used as the pigment.

The inorganic pigments are not particularly limited, can be appropriately selected according to a purpose, and examples thereof include, but are not limited to, titanium oxide, iron oxide, aluminum hydroxide, Barium Yellow, Cadmium Red, Chrome Yellow, and carbon black produced by a known method such as a contact method, a furnace method, and a thermal method.

The organic pigments are not particularly limited and can be appropriately selected according to a purpose. Examples of the organic pigments include, but are not limited to, polycyclic pigments such as azo pigments, phthalocyanine pigments, perylene pigments, perinone pigments, anthraquinone pigments, quinacridone pigments, dioxazine pigments, indigo pigments, thioindigo pigments, isoindolinone pigments, and quinophthalone pigments; dye chelates such as basic dye chelates and acid dye chelates; nitro pigments, nitroso pigments, aniline black, hollow resin particles, and inorganic hollow particles. Among these, organic pigments having good affinity for solvents are preferred.

The pigments are not particularly limited and can be appropriately selected according to a purpose. Examples of the pigments include, but are not limited to, carbon blacks (C.I. Pigment Black 7) such as furnace black, lamp black, acetylene black, and channel black used for black colors, or metals such as copper, iron (C.I. Pigment Black 11), and titanium oxide, and organic pigments such as aniline black (C.I. Pigment Black 1). Examples of pigments used for colors include, but are not limited to, C.I. Pigment Yellow 1, 3, 12, 13, 14, 17, 24, 34, 35, 37, 42 (yellow iron oxide), 53, 55, 74, 81, 83, 95, 97, 98, 100, 101, 104, 108, 109, 110, 117, 120, 138, 150, 153, 155, 180, 185, and 213, C.I. Pigment Orange 5, 13, 16, 17, 36, 43, and 51, C.I. Pigment Red 1, 2, 3, 5, 17, 22, 23, 31, 38, 48:2 (Permanent Red 2B (Ca)), 48:3, 48:4, 49:1, 52:2, 53:1, 57:1 (Brilliant Carmine 6B), 60:1, 63:1, 63:2, 64:1, 81, 83, 88, 101 (Bengara), 104, 105, 106, 108 (Cadmium Red), 112, 114, 122 (Quinacridone Magenta), 123, 146, 149, 166, 168, 170, 172, 177, 178, 179, 184, 185, 190, 193, 202, 207, 208, 209, 213, 219, 224, 254, and 264, C.I. Pigment Violet 1 (Rhodamine Lake), 3, 5:1, 16, 19, 23, and 38, C.I. Pigment Blue 1, 2, 15 (Phthalocyanine Blue), 15:1, 15:2, 15:3, 15:4 (Phthalocyanine Blue), 16, 17:1, 56, 60, and 63, and C.I. Pigment Green 1, 4, 7, 8, 10, 17, 18, and 36.

The pigment is preferably used after being dispersed in ink.

Examples of methods of dispersing the pigment to obtain ink include, but are not limited to, a method of introducing a hydrophilic functional group into a pigment to obtain a self-dispersing pigment, a method of coating the surface of a pigment with a resin to disperse the pigment, and a method of using a dispersant to disperse the pigment.

Examples of the method of introducing a hydrophilic functional group into a pigment to obtain a self-dispersing pigment include, but are not limited to, a method of adding a functional group such as a sulfone group or a carboxyl group to a pigment (for example, carbon) to obtain a pigment that is dispersible in water.

Examples of the method of coating the surface of a pigment with a resin to disperse the pigment include, but are not limited to, a method of encapsulating the pigment in microcapsules to obtain a pigment that is dispersible in water. Such a pigment may be referred to as a resin-coated pigment. In this case, not all the pigment particles may be covered with the resin. The ink may contain pigment particles that are not covered with resin and pigment particles that are partially covered with resin.

Examples of the method of using a dispersant to disperse the pigment include, but are not limited to, a method of dispersing the pigment by using a known low-molecular-type dispersant or a polymer-type dispersant, such as a surfactant. For example, depending on the pigment, anionic surfactants, cationic surfactants, amphoteric surfactants, and nonionic surfactants may be used as the dispersant. RT-100 (a nonionic surfactant) manufactured by Takemoto Oil & Fat Co., Ltd. and a sodium naphthalene sulfonate formalin condensate can also be suitably used as the dispersant. One type of dispersant may be used alone, or two or more types may be used in combination.

The dyes are not particularly limited and can be appropriately selected according to a purpose. Examples of the dyes include, but are not limited to, acid dyes, direct dyes, reactive dyes, and basic dyes. These dyes may be used alone or in combination of two or more types.

Examples of the dyes include, but are not limited to, C.I. Acid Yellow 17, 23, 42, 44, 79, and 142, C.I. Acid Red 52, 80, 82, 249, 254, and 289, C.I. Acid Blue 9, 45, and 249, C.I. Acid Black 1, 2, 24, and 94, C.I. Food Black 1 and 2, C.I. Direct Yellow 1, 12, 24, 33, 50, 55, 58, 86, 132, 142, 144, and 173, C.I. Direct Red 1, 4, 9, 80, 81, 225, and 227, C.I. Direct Blue 1, 2, 15, 71, 86, 87, 98, 165, 199, and 202, C.I. Direct Black 19, 38, 51, 71, 154, 168, 171, and 195, C.I. Reactive Red 14, 32, 55, 79, and 249, and C.I. Reactive Black 3, 4, and 35.

The content of the coloring material is not particularly limited and can be appropriately selected according to a purpose. However, the content is preferably 1.0 mass% or more and 15.0 mass% or less, and more preferably 1.0 mass% or more and 10.0 mass% or less with respect to the total amount of the first liquid.

- Other Components -

The other components are not particularly limited and can be appropriately selected according to a purpose. Examples of the other components include, but are not limited to, antifoaming agents, preservatives and fungicides, rust inhibitors, pH adjusters, and filmforming auxiliary agents.

A method of measuring the P99 in the ISO Max Distance particle size distribution is not particularly limited and can be appropriately selected according to a purpose. Examples of the method include, but are not limited to, a method of using an injection-type image analysis particle size distribution meter IF-3200 to measure the P99.

Specifically, the ink is diluted with water so that the particles in the ink can be observed, and the injection-type image analysis particle size distribution meter IF-3200 may be used to measure the P99 in the ISO Max Distance particle size distribution based on the number of particles in the ink in the range from 0.1 μm to 100 μm. The amount of dilution varies depending on the amount and the size of the particle components in the ink, and thus, it is desirable to adjust the

dilution ratio so that the size of each particle in the ink can be observed. If the ink aggregates in water, the ink may be diluted with a solvent that does not cause the ink to aggregate (for example, cyclohexane).

The glass transition temperature of a dried film (may be referred to as "first layer" hereinafter) of the first liquid is not particularly limited and can be appropriately selected according to a purpose, but is preferably 15°C or lower.

A method of measuring the glass transition temperature is not particularly limited and can be appropriately selected according to a purpose. However, the glass transition temperature may be measured by using a differential scanning calorimeter (TA-60WS and DSC-60, manufactured by Shimadzu Corporation).

Specifically, first, 4 g of the first liquid is filled into a petri dish made of a tetrafluoroethylene/perfluoroalkyl vinyl ether copolymer (PFA) having a diameter of 50 mm and the first liquid is spread evenly and dried at 50°C for one week to obtain a dried film of the first liquid. 5.0 mg of the obtained dried film of the first liquid is filled into a sample container made of aluminum, and the sample container is placed on a holder unit and set in an electric furnace.

Next, in a nitrogen atmosphere, the temperature is raised from 0°C to 150°C at a temperature increase rate of 10°C/min, then lowered from 150°C to -80°C at a cooling rate of 5°C/min, and afterwards, raised again to 150°C at a temperature increase rate of 10°C/min, to obtain a DSC curve.

An analysis program of a DSC-60 system is used to analyze, from the obtained DSC curve, an inflection part during the second temperature increase by the midpoint method to determine the glass transition temperature (Tg).

The content of the resin in the dried film of the first liquid is not particularly limited and may be appropriately selected according to a purpose. However, the content is preferably 10 mass% or more and 60 mass% or less. Note that the content expresses the solid content of the resin.

The solid content in the first liquid is not particularly limited and can be appropriately selected according to a purpose. However, to obtain good drying properties and excellent concealing properties, the solid content is preferably 45 mass% or more, and more preferably 55 mass% or more. The solid content includes solid components contained in the first liquid. Examples of the solid components include, but are not limited to, thickeners, resins, and pigments.

A method of measuring the solid content is not particularly limited and can be appropriately selected according to a purpose. For example, the solid content may be measured by drying a sample at 150°C for 30 minutes and measuring the solid content concentration in accordance with JIS K5601-1-2.

The static surface tension of the first liquid is not particularly limited and can be appropriately selected according to a purpose. However, the static surface tension of the first liquid at 25°C is preferably 35 mN/m or less, and more preferably 30 mN/m or less, so that the first liquid is suitably levelized on a base material and the drying time of the first liquid is shortened.

A method of measuring the static surface tension is not particularly limited and can be appropriately selected according to a purpose. For example, the static surface tension may be measured by the Wilhelmy method (plate method) using a platinum plate by employing an automatic surface tensiometer (DY-300, manufactured by Kyowa Interface Science Co., Ltd.).

The pH of the first liquid is not particularly limited and can be appropriately selected according to a purpose. However, to prevent corrosion of metal members in contact with the first liquid, the pH of the first liquid is preferably 7 or more and 12 or less, and more preferably 8 or more and 11 or less.

A method of manufacturing the first liquid is not particularly limited and can be appropriately selected according to a purpose. For example, the first liquid may be obtained by dispersing or dissolving the constituent components in an aqueous medium and further stirring and mixing the mixture as desired.

When stirring and mixing the mixture, a stirrer using normal stirring blades, a magnetic stirrer, or a high-speed disperser may be used.

### <Second Step and Second Unit>

The second step is a second step of performing printing by discharging a second liquid from a nozzle onto the first liquid deposited on the object to be coated.

The second unit is a unit used for performing printing by discharging a second liquid from a nozzle onto the first liquid deposited on the object to be coated.

The second step can be implemented by the second unit.

A method of depositing the liquid is not particularly limited and can be appropriately selected according to a purpose, but an inkjet method is preferred.

#### <<Second Liquid>>

The second liquid is not particularly limited, can be appropriately selected according to a purpose, and examples thereof include ink, paint, and a treatment liquid.

The ink is not particularly limited, can be appropriately selected according to a purpose, and examples thereof

include, but are not limited to, white ink, transparent ink, and color ink. Among these types of ink, color ink is preferred, because color ink can color the object to be coated.

The viscosity of the second liquid at a shear rate of 1 $s^{-1}$ at 25°C is preferably 1.5 mPa·s or more and 3.0×10 mPa·s or less, and more preferably 3.0 mPa·s or more and 3.0×10 mPa·s or less. When the viscosity of the second liquid at a shear rate of 1 $s^{-1}$ at 25°C is 1.5 mPa·s or more, the second liquid is less likely to bleed when the first liquid is deposited on the object to be coated and then, the second liquid is discharged from a nozzle onto the first liquid deposited on the object to be coated to perform printing. When the viscosity of the second liquid at a shear rate of 1 $s^{-1}$ at 25°C is 3.0×10 mPa·s or less, the film thickness of the second liquid can be formed thinly and the second liquid can be spread, and it is possible to obtain colors such as red, green, and blue by mixing liquids such as cyan, yellow, and magenta.

A method of measuring the viscosity of the second liquid at a shear rate of 1 $s^{-1}$ at 25°C is not particularly limited and can be appropriately selected according to a purpose. For example, the viscosity of the second liquid can be measured by using a method similar to the one used for the first liquid.

The second liquid contains a resin and a solvent, preferably contains a coloring material and a surfactant, and if desired, further contains other components.

- Resin -

The resin contained in the second liquid is not particularly limited and can be appropriately selected according to a purpose. Similarly to the first liquid, examples of the resin contained in the second liquid include, but are not limited to, urethane resins, polyester resins, acrylic resins, vinyl acetate resins, styrene resins, butadiene resins, styrene-butadiene resins, vinyl chloride resins, acrylic-styrene resins, and acrylic-silicone resins. These resins may be used alone or in combination of two or more types.

Note that resin particles formed of these resins may be used as the resin, and the ink may be obtained by dispersing the resin particles in a solvent as a dispersion medium to form a resin emulsion, and mixing the resin emulsion with materials such as coloring materials and organic solvents.

The resin particles may be appropriately synthesized, or a commercially available product may be used as the resin particles. These resin particles may be used alone or in combination of two or more types of resin particles.

The glass transition temperature of the resin is not particularly limited and can be appropriately selected according to a purpose. However, from the viewpoint of suppressing cracking of the coating film when a thick coating film is used, the glass transition temperature is preferably 15°C or lower, and more preferably 0°C or lower.

A method of measuring the glass transition temperature is not particularly limited and can be appropriately selected according to a purpose. The glass transition temperature may be measured by using a method similar to that used for the resin contained in the first liquid.

The content of the resin is not particularly limited and can be appropriately selected according to a purpose. However, the content is preferably 0.1 mass% or more and 30 mass% or less, and more preferably 1 mass% or more and 5 mass% or less, with respect to the total amount of the second liquid, to obtain a coating film having excellent robustness. Note that the content expresses the solid content of the resin.

- Solvent -

The solvent contained in the second liquid is not particularly limited and can be appropriately selected according to a purpose. Similarly to the first liquid, examples of the solvent contained in the second liquid include, but are not limited to, organic solvents and water.

The organic solvent is not particularly limited and can be appropriately selected according to a purpose. Examples of the organic solvent include, but are not limited to, ethers such as polyhydric alcohol alkyl ethers and polyhydric alcohol aryl ethers, polyhydric alcohols, heterocyclic compounds containing nitrogen, amides, amines, compounds containing sulfur, propylene carbonate, and ethylene carbonate.

The content of the organic solvent is not particularly limited and can be appropriately selected according to a purpose. However, the content is preferably 1.0 mass% or more and 50 mass% or less, and more preferably 3.0 mass% or more and 35.0 mass% or less, with respect to the total amount of the second liquid, to obtain excellent drying properties.

The content of water is not particularly limited and can be appropriately selected according to a purpose. However, considering the drying properties and the discharge reliability of the ink, the content of water is preferably 10 mass% or more and 90 mass% or less, and more preferably 20 mass% or more and 60 mass% or less, with respect to the total amount of the second liquid.

- Surfactant -

The surfactant contained in the second liquid is not particularly limited and can be appropriately selected

according to a purpose. Similarly to the first liquid, examples of the surfactant contained in the second liquid include, but are not limited to, silicone-based surfactants, fluorine-based surfactants, amphoteric surfactants, nonionic surfactants, and anionic surfactants. These surfactants may be used alone or in combination of two or more types.

The content of the surfactant is not particularly limited and can be appropriately selected according to a purpose. However, to achieve excellent wettability and discharge stability and improve the image quality, the content of the surfactant is preferably 0.001 mass% or more and 5 mass% or less, and more preferably, 0.05 mass% or more and 5 mass% or less, with respect to the total amount of the second liquid.

- Coloring Material -

The coloring material is not particularly limited and can be appropriately selected according to a purpose. Similarly to the first liquid, examples of the coloring material include, but are not limited to, pigments and dyes.

The content of the coloring material is not particularly limited and can be appropriately selected according to a purpose. However, the content is preferably 1.0 mass% or more and 15.0 mass% or less, and more preferably 1.0 mass% or more and 10.0 mass% or less with respect to the total amount of the second liquid.

- Other Components -

The other components contained in the second liquid are not particularly limited, can be appropriately selected according to a purpose, and examples thereof include similar components as the other components in the first liquid.

The solid content in the second liquid is not particularly limited and can be appropriately selected according to a purpose. However, to obtain good drying properties, the solid content is preferably 0.1 mass% or more and 80 mass% or less, and more preferably 1 mass% or more and 25 mass% or less. The solid content includes solid components contained in the second liquid. Examples of the solid components include, but are not limited to, resins and pigments.

The static surface tension of the second liquid is not particularly limited and can be appropriately selected according to a purpose. However, the static surface tension at 25°C is preferably 35 m/Nm or less, and more preferably 30 m/Nm or less, because in this case, it is possible to suppress bleeding in a printed matter formed from the first liquid and the second liquid.

A method of measuring the static surface tension is not particularly limited and can be appropriately selected according to a purpose. For example, the static surface tension may be measured by a method similar to the method used for the first liquid.

The difference (C - D) between the static surface tension (C) of the first liquid and the static surface tension (D) of the second liquid is not particularly limited and can be appropriately selected according to a purpose. However, to suppress bleeding in a printed matter formed from the first liquid and the second liquid, it is preferable that the difference (C - D) satisfies Expression (1) below, and it is more preferable that the difference (C - D) satisfies Expression (2) below.

$$C\ (m/Nm) - D\ (m/Nm) \leq 10\ (m/Nm) \ \ldots \text{Expression (1)}$$

$$C\ (m/Nm) - D\ (m/Nm) \leq 1\ (m/Nm) \ \ldots \text{Expression (2)}$$

A method of manufacturing the second liquid is not particularly limited and can be appropriately selected according to a purpose. For example, the second liquid may be obtained by dispersing or dissolving the constituent components in an aqueous medium and further stirring and mixing the mixture as desired.

When stirring and mixing the mixture, a stirrer using normal stirring blades, a magnetic stirrer, or a high-speed disperser may be used.

<Third Step and Third Unit>

A printing method according to one embodiment of the present invention may include a third step, if desired.

The third step is a third step of performing printing by discharging a third liquid from a nozzle onto the second liquid deposited on the object to be coated.

A printing apparatus according to one embodiment of the present invention may include a third unit, if desired.

The third unit is a unit used for printing by discharging a third liquid from a nozzle onto the second liquid deposited on the object to be coated.

The third step can be implemented by the third unit.

A method of depositing the liquid is not particularly limited and can be appropriately selected according to a purpose, but an inkjet method is preferred.

<<Third Liquid>>

The third liquid is not particularly limited, can be appropriately selected according to a purpose, and examples thereof include, but are not limited to, ink, paint, and a treatment liquid.
The ink is not particularly limited, can be appropriately selected according to a purpose, and examples thereof include, but are not limited to, white ink, transparent ink, and color ink. Among these, transparent ink is preferred, because by using transparent ink, it is possible to protect the second liquid after drying to improve the robustness, and impart high gloss or low gloss to the surface of the printed matter after drying.
The viscosity of the third liquid is not particularly limited and may be appropriately selected according to a purpose. However, the viscosity of the third liquid is preferably equivalent to the viscosity of the first liquid and the viscosity of the second liquid described above, because in this case, the third liquid can be deposited by an inkjet method or a spray method.
A method of measuring the viscosity of the third liquid is not particularly limited and can be appropriately selected according to a purpose. For example, the viscosity of the third liquid can be measured by using a method similar to the one used for the first liquid and the second liquid.
The third liquid contains a resin and a solvent, preferably contains a coloring material and a surfactant, and if desired, further contains other components.
The resin contained in the third liquid is not particularly limited and can be appropriately selected according to a purpose. For example, the resin in the first liquid or the resin in the second liquid described above may be used.
The content of the resin contained in the third liquid is not particularly limited and can be appropriately selected according to a purpose. However, the content of the resin contained in the third liquid may be the content of the resin in the first liquid or the content of the resin in the second liquid described above.
The solvent contained in the third liquid is not particularly limited and can be appropriately selected according to a purpose. For example, the solvent in the first liquid or the solvent in the second liquid described above may be used.
The content of the solvent is not particularly limited and can be appropriately selected according to a purpose. However, the content of the solvent may be the content of the solvent in the first liquid or the content of the solvent in the second liquid described above.
The surfactant contained in the third liquid is not particularly limited and can be appropriately selected according to a purpose. For example, the surfactant in the first liquid or the surfactant in the second liquid described above may be used.
The content of the surfactant is not particularly limited and can be appropriately selected according to a purpose. However, the content of the surfactant may be the content of the surfactant in the first liquid or the content of the surfactant in the second liquid described above.
The coloring material contained in the third liquid is not particularly limited and can be appropriately selected according to a purpose. For example, the coloring material of the first liquid or the coloring material of the second liquid described above may be used.
The content of the coloring material contained in the third liquid is not particularly limited and can be appropriately selected according to a purpose. However, the content of the coloring material may be the content of the coloring material in the first liquid or the content of the coloring material in the second liquid described above.
The other components contained in the third liquid are not particularly limited, can be appropriately selected according to a purpose, and examples thereof include similar components as the other components in the first liquid.
The solid content in the third liquid is not particularly limited and can be appropriately selected according to a purpose. However, the solid content in the third liquid may be the solid content in the first liquid or the solid content in the second liquid described above.

(Ink Set)

An ink set according to one embodiment of the present invention includes a first liquid having a viscosity of $1.00\times10^3$ mPa·s or more at a shear rate of 1 $s^{-1}$ at 25°C and a viscosity of $3.50\times10^2$ mPa·s or less at a shear rate of 5,000 $s^{-1}$ at 25°C, and a second liquid having a viscosity of 3 mPa·s or more and $3.0\times10$ mPa·s or less at a shear rate of 1 $s^{-1}$ at 25°C.
An ink set according to one embodiment of the present invention is preferably an ink set for printing on a porous object to be coated, which is used for printing on a porous object to be coated.
Below, an example of an inkjet printing apparatus as a printing apparatus according to one embodiment of the present invention will be described with reference to the drawings. Note that the present invention is not limited to the embodiments described below.
FIG. 1 is a schematic side view of a liquid discharge apparatus as a printing apparatus according to one embodiment of the present invention.

FIG. 2 is a schematic plan view of a liquid discharge apparatus as a printing apparatus according to one embodiment of the present invention.

A liquid discharge apparatus 1000 is installed to face a printing material 100. A carriage a includes a head 300 that discharges ink, which is an example of the liquid, toward the printing material 100. A Z-axis rail 103 holds the carriage a so that the carriage a can move in a Z-axis direction.

An X-axis rail 101 holds the Z-axis rail 103 so that the Z-axis rail 103 holding the carriage a can move in an X-axis direction. A Y-axis rail 102 holds the X-axis rail 101 so that the X-axis rail 101 can move in a Y-axis direction. Here, the X-axis is an example of a "first axis", the Y-axis is an example of a "second axis intersecting the first axis", and the Z-axis is an example of a "third axis intersecting the first axis and the second axis". Further, the carriage a is an example of a "liquid discharge unit", and the head 300 is an example of a "liquid discharge head".

The liquid discharge apparatus 1000 includes a Z-direction drive portion 92 that moves the carriage a in the Z-axis direction along the Z-axis rail 103, and an X-direction drive portion 72 that moves the Z-axis rail 103 in the X-axis direction along the X-axis rail 101. Further, the liquid discharge apparatus 1000 includes a Y-direction drive portion 82 that moves the X-axis rail 101 in the Y-axis direction along the Y-axis rail 102. The Z-direction drive portion 92 is an example of a "first drive unit" and moves the carriage a in the direction of the Z-axis, which intersects the X-axis and the Y-axis. Note that the movement of the carriage a and the head 300 in the direction of the Z-axis does not have to be parallel to the Z-axis direction, and may be an oblique movement, as long as the movement includes at least a component in the Z-axis direction.

The carriage a further includes another Z-direction drive portion 93. The Z-direction drive portion 93 is an example of a "second drive unit" and moves the head 300 relative to the carriage a in the direction of the Z-axis.

The liquid discharge apparatus 1000 configured as described above discharges ink from the head 300 toward the printing material 100, while moving the carriage a in the directions of the X-axis, the Y-axis, and the Z-axis, to perform drawing on the printing material 100. Note that the printing material 100 is illustrated in the drawing in the form of a flat plate. However, the printing material 100 may be a surface having a large curvature radius or an almost vertical surface such as a car, a truck, and an airplane.

-- Ink Discharge Unit --

The ink discharge unit is not particularly limited, as long as the ink discharge unit uses an inkjet nozzle to discharge ink. However, an example of the ink discharge unit includes a discharge unit including a nozzle hole through which ink is discharged, an ink chamber that supplies pressurized ink to the nozzle hole, and a needle valve that is provided in the ink chamber and opens and closes the nozzle hole to control the discharge of ink.

An example of an inkjet nozzle for implementing the discharge unit is the inkjet nozzle described in Japanese Patent No. 4123897, and schematic configuration diagrams of the nozzle are illustrated in FIGs. 3 and 4.

(Printed matter)

A printed matter according to one embodiment of the present invention includes an object to be coated, a first layer formed on the object to be coated by a first liquid having a viscosity of $1.00\times10^3$ mPa·s or more at a shear rate of 1 $s^{-1}$ at 25°C and a viscosity of $3.50\times10^2$ mPa·s or less at a shear rate of 5,000 $s^{-1}$ at 25°C, and a second layer formed on the first layer by a second liquid having a viscosity of 3 mPa·s or more and $3.0\times10$ mPa·s at a shear rate of 1 $s^{-1}$ at 25°C.

(Method of Manufacturing Printed matter)

A method of manufacturing a printed matter according to one embodiment of the present invention includes a step of forming a first layer formed by a first liquid having a viscosity of $1.00\times10^3$ mPa·s or more at a shear rate of 1 $s^{-1}$ at 25°C and a viscosity of $3.50\times10^2$ mPa·s or less at a shear rate of 5,000 $s^{-1}$ at 25°C, and a step of forming, on the first layer, a second layer formed by a second liquid having a viscosity of 3 mPa·s or more and $3.0\times10$ mPa·s at a shear rate of 1 $s^{-1}$ at 25°C.

The step of forming the first layer can be implemented by a similar method as the first step in the printing method according to one embodiment of the present invention.

The step of forming the second layer can be implemented by a similar method as the second step in the printing method according to one embodiment of the present invention.

<Object to be Coated>

The object to be coated (may be referred to as "base material", "printing material", and the like hereinafter) refers to a target object to be printed by the printing method and the printing apparatus according to one embodiment of the present invention, and refers to an object onto which ink or a treatment liquid can be deposited, even temporarily.

The object to be coated is not particularly limited and can be appropriately selected according to a purpose. Preferred examples of the object to be coated include, but are not limited to, a road surface, an exterior wall, a floor, a porous object to be coated such as a porous base material, and a building material sheet.
The shape, the structure, and the material of the object to be coated are not particularly limited and can be appropriately selected according to a purpose. Examples of the object to be coated include, but are not limited to, sidings (ceramic, resin, wood, and metal sidings), asphalt, asphalt felt, concrete, glass, cloth, paper, plastic, wood, metal (such as brass, iron, aluminum, stainless steel (SUS), and copper), or a non-metallic base material coated with metal by a method such as vapor deposition.
Examples of the porous base material include, but are not limited to, base materials having high ink permeability, such as asphalt and sponge.
Further, in the present disclosure, the terms "image formation", "recording", "text printing", "printing", and the like are all used synonymously.
The terms "recording medium", "media", and "printing material" are all used synonymously.

[Examples]

Examples of embodiments of the present invention will be described below, but the present invention is not limited to the Examples in any way.

<Preparation Example 1 of Pigment Dispersion>

200 parts by mass of C.I. Pigment White 6 (manufactured by Tayca Corp., product name "JR-403", number average primary particle diameter 250 nm, aspect ratio 2, surface treatment: Al, Si) as a pigment, 56 parts by mass of pigment dispersant (product name: TEGO Dispers 651, manufactured by Evonik Co., Ltd.), and 744 parts by mass of distilled water were premixed.
Afterwards, a bead mill disperser (manufactured by Kotobuki Kogyou Co., Ltd., UAM-015) was used to disperse the mixture during 15 minutes with zirconia beads (density $6.03 \times 10^{-6}$ g/m$^2$) having a diameter of 0.03 mm at a peripheral speed of 10 m/s, and a liquid temperature of 30°C. Next, The coarse particles were centrifuged and separated by using a centrifuge (manufactured by Kubota Corporation Co., Ltd., Model-3600) to obtain White Pigment Dispersion 1 (solid content 20.0 mass%) having an average particle diameter of 250 nm.

<Preparation Example 2 of Pigment Dispersion>

Yellow Pigment Dispersion 1 (solid content of 25.0 mass%) having an average particle diameter of 90 nm was obtained by a procedure similar to Preparation Example 1 of the pigment dispersion, except that C.I. Pigment White 6 in Preparation Example 1 of the pigment dispersion was changed to Pigment Yellow 110 (CORIMAX Yellow 3RL, manufacturer: Zeya Chemicals (Haimen) Co., Ltd.).

<Preparation Example 3 of Pigment Dispersion>

Cyan Pigment Dispersion 1 (solid content of 20.0 mass%) having an average particle diameter of 80 nm was obtained by a procedure similar to Preparation Example 1 of the pigment dispersion, except that C.I. Pigment White 6 in the Preparation Example 1 of the pigment dispersion was changed to Pigment Blue 15:3 (Cyanine Blue A-385, manufactured by Dainichiseika Color & Chemicals Mfg. Co., Ltd.).

<Preparation Example 4 of Pigment Dispersion>

Magenta Pigment Dispersion 1 (solid content of 20.0 mass%) having an average particle diameter of 120 nm was obtained by a procedure similar to Preparation Example 1 of the pigment dispersion, except that C.I. Pigment White 6 in Preparation Example 1 of the pigment dispersion was changed to Pigment Red 122 (CROMOPHTAL JET Magenta DMQ, manufactured by Ciba Specialty Chemicals).

<Preparation Example 1 of Resin Emulsion>

A mixture of 55.4 parts by mass of methyl methacrylate as a monomer, 44.6 parts by mass of 2-ethylhexyl acrylate, 1.5 parts by mass of AQUALON KH-20 (manufactured by DKS Co., Ltd.) as an emulsifier, and 53.1 parts by mass of ion-exchanged water was emulsified by using a batch-type homomixer to prepare a monomer pre-emulsion.
A four-necked flask having a volume of 2 L was equipped with a stirrer, a nitrogen introduction tube, a reflux

condenser, a thermometer, and a raw material inlet. 89.4 parts by mass of ion-exchanged water were filled into the flask and stirred while introducing nitrogen, and the temperature of the liquid was increased to 60°C.

0.5 parts by mass of AQUALON KH-20 as an emulsifier and 6 parts by mass of a 5% ammonium persulfate aqueous solution (0.3 parts by mass of ammonium persulfate) were added to the reaction vessel.

Subsequently, 10 minutes after adding the 5% ammonium persulfate aqueous solution to the reaction vessel, the monomer pre-emulsion was continuously added dropwise from a liquid dropping tank over 5 hours. From another liquid dropping tank, 6 parts of the 5% ammonium persulfate aqueous solution (0.3 parts of ammonium persulfate) was added intermittently dropwise at 70°C over 5 hours.

After the 5% ammonium persulfate aqueous solution is added dropwise, the mixture was maintained at 70°C for 3 hours to mature.

Subsequently, the mixture was cooled to 50°C, ammonia water was added, and the mixture was filtered through a 180-mesh polyester filter cloth to obtain Resin Emulsion A.

A part of the obtained Resin Emulsion A was dried at 150°C during 30 minutes. The solid content concentration was measured in accordance with JIS K5601-1-2 and determined as 50.0%. Further, the glass transition temperature of Resin Emulsion A was measured by the method described below and was determined as 0°C.

<Measurement of Glass Transition Temperature (Tg) of Resin Emulsion>

4 g of the resin emulsion was filled into a petri dish made of a tetrafluoroethylene/perfluoroalkyl vinyl ether copolymer (PFA) having a diameter of 50 mm and the resin emulsion was spread evenly and dried at 50°C for one week to obtain a resin film. 5.0 mg of the obtained resin film was filled into a sample container made of aluminum, and the sample container was placed on a holder unit and set in an electric furnace.

Next, in a nitrogen atmosphere, the temperature was raised from 0°C to 150°C at a temperature increase rate of 10°C/min, then lowered from 150°C to -80°C at a cooling rate of 5°C/min, and afterwards, raised again to 150°C at a temperature increase rate of 10°C/min, to obtain a DSC curve.

An analysis program of a DSC-60 system was used to analyze, from the obtained DSC curve, an inflection part during the second temperature increase by the midpoint method to determine the glass transition temperature (Tg).

(Synthesis Example 1 of First Liquid)

3.0 mass% of propylene glycol and 9.3 mass% of ion-exchanged water as a solvent, 31.0 mass% of Resin Emulsion A as a resin, 20.0 mass% of White Pigment Dispersion 1 as a coloring material, and 0.7 mass% of FS-300 as a surfactant were mixed. The mixture was stirred for 30 minutes to obtain a uniform mixture, 36.0 mass% of calcium carbonate (UP-G, manufactured by Imerys Specialties Japan Co., Ltd., solid content: 100 mass%) were added as a thickener, and the obtained mixture was further stirred at high speed for one hour to obtain First Liquid 1 as a uniform mixture.

The viscosity, the solid content concentration, and the static surface tension of the obtained First Liquid 1 were measured by the methods described below. The measurement results are illustrated in Table 1.

<Viscosity>

- Viscosity at Shear Rates of 1 $s^{-1}$, 5,000 $s^{-1}$, and 0.1 $s^{-1}$ at 25°C -

To measure the viscosity of First Liquid 1, an MCR 301 (manufactured by Anton Parr GmbH) using a cone plate (cone radius: 25 mm, cone angle: 1°) was used to measure the viscosity (mPa*s) at a shear rate of 1 $s^{-1}$ at 25°C, the viscosity (mPa*s) at a shear rate of 5,000 $s^{-1}$ at 25°C, and the viscosity (mPa*s) at a shear rate of 0.1 $s^{-1}$ at 25°C.

<Solid Content>

A part of the obtained First Liquid 1 was dried at 150°C for 30 minutes and the solid content concentration was measured in accordance with JIS K5601-1-2.

<Static Surface Tension>

The static surface tension of First Liquid 1 was measured by the Wilhelmy method (plate method) using a platinum plate, by employing an automatic surface tensiometer (DY-300, manufactured by Kyowa Interface Science Co., Ltd.).

(Synthesis Examples 2 to 12 of First Liquid)

First Liquids 2 to 12 were obtained similarly to Synthesis Example 1 of the first liquid, except that the composition of the first liquid in the Synthesis Example 1 of the first liquid was changed to the compositions listed in Tables 1 and 2 below. Further, the viscosity, the solid content concentration, and the static surface tension were measured in the obtained First Liquids 2 to 12 by a method similar to Synthesis Example 1 of the first liquid. The measurement results are illustrated in Tables 1 and 2.

Table 1

| First Liquid No. | | 1 | 2 | 3 | 4 | 5 | 6 |
|---|---|---|---|---|---|---|---|
| Thickener | UP-G (solid content: 100 mass%) | 36.0 | 28.0 | 22.0 | - | 39.0 | 16.0 |
| | SUPER #2000 (solid content: 100 mass%) | - | - | - | 44.0 | - | - |
| Resin | Resin Emulsion A (Tg: 0°C, solid content: 50 mass%) | 31.0 | 26.0 | 27.0 | 27.0 | 34.0 | 22.0 |
| Coloring material | White Pigment Dispersion 1 | 20.0 | 20.0 | 20.0 | 20.0 | 20.0 | 20.0 |
| | Yellow Pigment Dispersion 1 | - | - | - | - | - | - |
| Surfactant | FS-300 | 0.7 | 0.7 | 0.7 | 0.7 | 0.7 | 0.7 |
| Solvent | Propylene glycol | 3.0 | 3.0 | 3.0 | 3.0 | 3.0 | 3.0 |
| | Glycerin | - | - | - | - | - | - |
| | 1,3-Butanediol | - | - | - | - | - | - |
| | Ion-exchanged water | 9.3 | 22.3 | 27.3 | 5.3 | 3.3 | 38.3 |
| Total | | 100.0 | 100.0 | 100.0 | 100.0 | 100.0 | 100.0 |
| Physical property values | Viscosity (mPa*s) at 25°C and shear rate of 0.1 $s^{-1}$ | 30,000 | 7,000 | 4,000 | 26,000 | 124,000 | 1,000 |
| | Viscosity (mPa*s) at 25°C and shear rate of 1 $s^{-1}$ | 7,000 | 3,000 | 1,000 | 7,100 | 22,000 | 500 |
| | Viscosity (mPa*s) at 25°C and shear rate of 5,000 $s^{-1}$ | 70 | 21 | 18 | 71 | 130 | 16 |
| | Solid content (mass%) | 56 | 45 | 40 | 62 | 60 | 31 |
| | Static surface tension (mN/m) | 32.0 | 32.0 | 32.1 | 31.9 | 32.0 | 32.0 |
| | Ratio (A/B) of thickener content (A) to resin content (B) | 2.3 | 2.2 | 1.6 | 3.3 | 2.3 | 1.5 |

Table 2

| First Liquid No. | | 7 | 8 | 9 | 10 | 11 | 12 |
|---|---|---|---|---|---|---|---|
| Thickener | UP-G (solid content: 100 mass%) | - | - | 35.0 | 43.0 | - | - |
| | SUPER #2000 (solid content: 100 mass%) | - | - | - | - | 47.0 | 49.0 |
| Resin | Resin Emulsion A (Tg: 0°C, solid content: 50 mass%) | 56.0 | 70.0 | 31.0 | 31.0 | 33.0 | 33.0 |
| Coloring material | White Pigment Dispersion 1 | 15.0 | 15.0 | - | 20.0 | 15.0 | 15.0 |
| | Yellow Pigment Dispersion 1 | - | - | 18.0 | - | - | - |
| Surfactant | FS-300 | 0.7 | 0.7 | 0.7 | 0.7 | 0.7 | 0.7 |

(continued)

| First Liquid No. | | 7 | 8 | 9 | 10 | 11 | 12 |
|---|---|---|---|---|---|---|---|
| Solvent | Propylene glycol | - | - | 3.0 | 3.0 | 2.0 | 2.0 |
| | Glycerin | 8.0 | 8.0 | - | - | - | - |
| | 1,3-Butanediol | 4.0 | 4.0 | - | - | - | - |
| | Ion-exchanged water | 16.3 | 2.3 | 12.3 | 2.3 | 2.3 | 0.3 |
| Total | | 100.0 | 100.0 | 100.0 | 100.0 | 100.0 | 100.0 |
| Physical property values | Viscosity (mPa*s) at 25°C and shear rate of 0.1 $s^{-1}$ | 35 | 100 | 31,000 | 150,000 | 132,000 | 130,000 |
| | Viscosity (mPa*s) at 25°C and shear rate of 1 $s^{-1}$ | 27 | 78 | 7,200 | 25,000 | 24,000 | 25,000 |
| | Viscosity (mPa*s) at 25°C and shear rate of 5,000 $s^{-1}$ | 11 | 43 | 67 | 150 | 300 | 350 |
| | Solid content (mass%) | 28 | 35 | 55 | 63 | 67 | 69 |
| | Static surface tension (mN/m) | 32.1 | 29.9 | 32.0 | 32.1 | 32.2 | 32.1 |
| | Ratio (A/B) of thickener content (A) to resin content (B) | 0 | 0 | 2.3 | 2.8 | 2.8 | 3.0 |

(Synthesis Example 1 of Second Liquid)

22.0 mass% of glycerin, 11.0 mass% of 1,3-butanediol, and 2.0 mass% of 1,3-octanediol serving as solvents, 1.0 mass% of WET-270 as a surfactant, and 54.0 mass% of ion-exchanged water were mixed and stirred for 30 minutes to obtain a uniform mixture. 2.0 mass% of HAMALIC R-100 (rosin-modified maleic acid resin, solid content: 100 mass%) was added, and the mixture was again stirred for 1 hour to obtain a uniform mixture. Subsequently, 8.0 mass% of Cyan Pigment Dispersion 1 was added as a coloring material and the mixture was again stirred for 1 hour to obtain a uniform mixture. The mixture was filtered under pressure through a polyvinylidene fluoride membrane filter having an average pore size of 0.8 μm to remove coarse particles and dust, and thus, Second Liquid 1 was obtained.

The viscosity, the solid content concentration, and the static surface tension were measured in the obtained Second Liquid 1 by a method similar to Synthesis Example 1 of the first liquid. The viscosity was measured by using an E-type viscometer employing the method described below.

- Viscosity Measured using Cone-Plate Type Rotational Viscometer -

The second liquid was measured by employing a cone-plate type rotational viscometer (RE-85L, manufactured by Toki Sangyo Co., Ltd.) using a cone plate (cone radius: 24 mm, cone angle: 1°34').

(Synthesis Examples 2 to 9 of Second Liquid)

Second Liquids 2 to 9 were obtained similarly to Synthesis Example 1 of the second liquid, except that the composition of the second liquid in the Synthesis Example 1 of the second liquid was changed to the compositions listed in Tables 3 and 4 below. The viscosity, the solid content concentration, and the static surface tension were measured in the obtained Second Liquids 2 to 9 by a method similar to Synthesis Example 1 of the second liquid. The measurement results are illustrated in Tables 3 and 4.

Table 3

| Second Liquid No. | | 1 | 2 | 3 | 4 | 5 |
|---|---|---|---|---|---|---|
| Resin | R-100 (Tg: 0°C, solid content: 100 mass%) | 2.0 | 2.0 | 2.0 | 2.0 | 2.0 |
| Coloring material | Cyan Pigment Dispersion 1 | 8.0 | 8.0 | 8.0 | 8.0 | 8.0 |
| | Magenta Pigment Dispersion 1 | - | - | - | - | - |

(continued)

| Second Liquid No. | | 1 | 2 | 3 | 4 | 5 |
|---|---|---|---|---|---|---|
| Surfactant | WET-270 | 1.0 | - | - | - | - |
| | SURFYNOL 485 | - | 0.8 | - | - | - |
| | FS-300 | - | - | 0.3 | - | - |
| | ECTD-3NEX | - | - | - | 1.0 | - |
| | BYK-348 | - | - | - | - | 0.5 |
| Solvent | Glycerin | 22.0 | 22.0 | 22.0 | 22.0 | 22.0 |
| | 1,3-Butanediol | 11.0 | 11.0 | 11.0 | 11.0 | 11.0 |
| | Ion-exchanged water | 56.0 | 56.2 | 56.7 | 56.0 | 56.5 |
| Total | | 100.0 | 100.0 | 100.0 | 100.0 | 100.0 |
| Physical property values | Viscosity (mPa*s) at 25°C and shear rate of 1 $s^{-1}$ | 7.1 | 7.0 | 7.0 | 6.9 | 7.0 |
| | Solid content (mass%) | 4 | 4 | 4 | 4 | 4 |
| | Static surface tension (mN/m) | 31.0 | 32.5 | 38.2 | 29.0 | 22.0 |
| | Viscosity (mPa*s) measured using cone-plate type rotational viscometer | 7.0 | 7.0 | 7.0 | 7.0 | 7.0 |

Table 4

| Second Liquid No. | | 6 | 7 | 8 | 9 |
|---|---|---|---|---|---|
| Resin | R-100 (Tg: 0°C, solid content: 100 mass%) | 2.0 | 2.0 | 2.0 | 1.0 |
| Coloring material | Cyan Pigment Dispersion 1 | 8.0 | - | 8.0 | 6.0 |
| | Magenta Pigment Dispersion 1 | - | 8.0 | - | - |
| Surfactant | WET-270 | - | 1.0 | 1.0 | 1.0 |
| | SURFYNOL 485 | - | - | - | - |
| | FS-300 | - | - | - | - |
| | ECTD-3NEX | - | - | - | - |
| | BYK-348 | 0.8 | - | - | - |
| Solvent | Glycerin | 22.0 | 22.0 | 11.0 | 3.0 |
| | 1,3-Butanediol | 11.0 | 11.0 | - | - |
| | Ion-exchanged water | 56.2 | 56.0 | 78.0 | 89.0 |
| Total | | 100.0 | 100.0 | 100.0 | 100.0 |
| Physical property values | Viscosity (mPa*s) at 25°C and shear rate of 1 $s^{-1}$ | 6.9 | 5.0 | 3.1 | 1.5 |
| | Solid content (mass%) | 4 | 4 | 4 | 2 |
| | Static surface tension (mN/m) | 20.7 | 31.0 | 31.0 | 31.0 |
| | Viscosity (mPa*s) measured using cone-plate type rotational viscometer | 7.0 | 5.0 | 3.0 | 1.5 |

(Examples 1 to 18 and Comparative Examples 1 to 3)

In Examples 1 to 18 and Comparative Examples 1 to 3, the first liquid and the second liquid were combined, as indicated in Tables 5 to 7 below, to obtain Ink Sets 1 to 18.

Ink Sets 1 to 21 of Examples 1 to 18 and Comparative Examples 1 to 3 were used to produce printed matters. Specifically, the first liquid was applied to an object to be coated (open-graded asphalt mixture) by using any one of an inkjet method, a spray method, and a brush coating method, to form a first layer on the object to be coated. Subsequently, the

second liquid was applied onto the first layer by using an inkjet method to form a second layer (a solid image having dimensions of 3 cm × 3 cm) on the first layer, and thus, a printed matter was obtained.

When applying the first liquid to the object to be coated (open-graded asphalt), it is difficult to measure the thickness of the film formed by the first liquid on the object to be coated (open-graded asphalt), because the object to be coated has a porous shape. Therefore, the second liquid was filled into a TEFLON (registered trademark) petri dish in advance and dried, to confirm the amount of the first liquid applied per unit area that forms a film thickness of 250 μm after drying. The first liquid was applied to the object to be coated (open-graded asphalt) in the measured amount.

When applying the second liquid onto the first layer by using an inkjet method, the second liquid was applied in advance onto a non-permeable film by using an inkjet method. The amount of the second liquid applied per unit area that forms a film thickness of 1 μm after drying was confirmed, and the second liquid was applied onto the first layer in the measured amount.

In the printing operation of the first liquid using the inkjet method, a LETTER ROBO head (a head mounted on a LETTER ROBO, manufactured by Ricoh Digital Painting Co., Ltd.) was used after being modified to have a nozzle diameter of 600 μm, and a liquid discharge apparatus such as the apparatus illustrated in FIGs. 1 and 2 was used.

In the printing operation using a spray method, an airless spray gun having a nozzle diameter of 1.5 mm was used.

In the printing operation of the second liquid using the inkjet method, a LETTER ROBO head (a head mounted on a LETTER ROBO, manufactured by Ricoh Digital Painting Co., Ltd.) was used after being modified to have a nozzle diameter of 60 μm, and a liquid discharge apparatus such as the apparatus illustrated in FIGs. 1 and 2 was used.

The obtained printed matters were evaluated for "bleeding", "concealing properties", and "color unevenness". The evaluation results are listed in Tables 5 to 7. Tables 5 to 7 indicate the difference (C-D) between the static surface tension (C) of the first liquid and the static surface tension (D) of the second liquid in Ink Sets 1 to 21.

<Concealing Properties>

The "concealing properties" of the obtained printed matters were evaluated, based on the following evaluation criteria. Note that an evaluation result of "B" or higher is within a range usable in practice. The results are listed in Tables 5 to 7. Evaluation results listed as "-" indicate samples not subjected to the evaluation. Further, in Examples 16 to 18, it was not possible to discharge the first liquid by the inkjet method.

[Evaluation Criteria]

A: The color is reproduced similarly as when printed on a white sheet, and the object to be coated is completely concealed.
B: The color changes slightly compared to when printed on a white sheet, but the object to be coated is sufficiently concealed.
C: The color is significantly different from when printed on a white sheet, and the object to be coated is not concealed.

<Bleeding>

The "bleeding" in the obtained printed matters was evaluated, based on the following evaluation criteria. Note that an evaluation result of "B" or higher is within a range usable in practice. The results are listed in Tables 5 to 7. Evaluation results listed as "-" indicate samples not subjected to the evaluation. Further, in Examples 16 to 18, it was not possible to discharge the first liquid by the inkjet method.

[Evaluation Criteria]

A: Bleeding is not noticeable when observing the object to be coated from a distance of 30 cm, which is a very good result.
B: Bleeding is not noticeable when observing the object to be coated from a distance of more than 30 cm and 1 m or less, which is a good result.
C: Bleeding is not noticeable when observing the object to be coated from a distance of more than 1 m and 3 m or less.
D: Bleeding is noticeable when observing the object to be coated from a distance of 3 m.

<Color Unevenness>

The "color unevenness" of the obtained printed matters was evaluated, based on the following evaluation criteria. Note that an evaluation result of "B" or higher is within a range usable in practice. The results are listed in Tables 5 to 7. Evaluation results listed as "-" indicate samples not subjected to the evaluation. Further, in Examples 16 to 18, it was not possible to discharge the first liquid by the inkjet method.

[Evaluation Criteria]

A: The color unevenness is not noticeable when visually observed.

B: The color unevenness is slightly noticeable when visually observed.

C: The color unevenness is noticeable when visually observed.

Table 5

| | | | Examples | | | | | | | | | |
|---|---|---|---|---|---|---|---|---|---|---|---|---|
| | | | 1 | 2 | 3 | 4 | 5 | 6 | 7 | 8 | 9 | 10 |
| Ink Set No. | | | 1 | 2 | 3 | 4 | 5 | 6 | 7 | 8 | 9 | 10 |
| First Liquid | First Liquid No. | | 1 | 2 | 3 | 4 | 5 | 9 | 2 | 2 | 2 | 2 |
| | Viscosity (mPa*s) at 25°C and shear rate of 0.1 $s^{-1}$ | | 30,000 | 7,000 | 4,000 | 26,000 | 124,000 | 31,000 | 7,000 | 7,000 | 7,000 | 7,000 |
| | Viscosity (mPa*s) at 25°C and shear rate of 1 $s^{-1}$ | | 7,000 | 3,000 | 1,000 | 7,100 | 22,000 | 7,200 | 3,000 | 3,000 | 3,000 | 3,000 |
| | Viscosity (mPa*s) at 25°C and shear rate of 5,000 $s^{-1}$ | | 70 | 21 | 18 | 71 | 130 | 67 | 21 | 21 | 21 | 21 |
| | Solid content (mass%) | | 56 | 45 | 40 | 62 | 60 | 55 | 45 | 45 | 45 | 45 |
| | Static surface tension C (mN/m) | | 32.0 | 32.0 | 32.1 | 31.9 | 32.0 | 32.0 | 32.0 | 32.0 | 32.0 | 32.0 |
| Second Liquid | Second Liquid No. | | 1 | 1 | 1 | 1 | 1 | 1 | 2 | 3 | 4 | 5 |
| | Solid content (mass%) | | 4 | 4 | 4 | 4 | 4 | 4 | 4 | 4 | 4 | 4 |
| | Static surface tension D (mN/m) | | 31.0 | 31.0 | 31.0 | 31.0 | 31.0 | 31.0 | 32.5 | 38.2 | 29.0 | 22.0 |
| | Viscosity (mPa*s) measured by using cone-plate type rotational viscometer | | 7.0 | 7.0 | 7.0 | 7.0 | 7.0 | 7.0 | 7.0 | 7.0 | 7.0 | 7.0 |
| Difference (C - D) in static surface tension | | | 1 | 1 | 1.1 | 0.9 | 1 | 1 | -0.5 | -6.2 | 3 | 10 |
| Evaluation | Concealing properties | Inkjet method | A | A | B | A | A | A | A | A | A | A |
| | | Spray method | - | - | - | - | - | - | - | - | - | - |
| | | Brush coating method | - | - | - | - | - | - | - | - | - | - |
| | Bleeding | Inkjet method | A | B | C | B | A | A | A | A | B | B |
| | | Spray method | - | - | - | - | - | - | - | - | - | - |
| | | Brush coating method | - | - | - | - | - | - | - | - | - | - |
| | Color unevenness | Inkjet method | A | A | A | A | A | A | A | A | A | A |
| | | Spray method | - | - | - | - | - | - | - | - | - | - |
| | | Brush coating method | - | - | - | - | - | - | - | - | - | - |

Table 6

| | | | Examples | | | | | | | |
|---|---|---|---|---|---|---|---|---|---|---|
| | | | 11 | 12 | 13 | 14 | 15 | 16 | 17 | 18 |
| Ink Set No. | | | 11 | 12 | 13 | 14 | 15 | 16 | 17 | 18 |
| First Liquid | First Liquid No. | | 2 | 1 | 1 | 1 | 1 | 10 | 11 | 12 |
| | Viscosity (mPa*s) at 25°C and shear rate of 0.1 $s^{-1}$ | | 7,000 | 30,000 | 30,000 | 30,000 | 30,000 | 150,000 | 132,000 | 130,000 |
| | Viscosity (mPa*s) at 25°C and shear rate of 1 $s^{-1}$ | | 3,000 | 7,000 | 7,000 | 7,000 | 7,000 | 25,000 | 24,000 | 25,000 |
| | Viscosity (mPa*s) at 25°C and shear rate of 5,000 $s^{-1}$ | | 21 | 70 | 70 | 70 | 70 | 150 | 300 | 350 |
| | Solid content (mass%) | | 45 | 56 | 56 | 56 | 56 | 63 | 67 | 69 |
| | Static surface tension C (mN/m) | | 32.0 | 32.0 | 32.0 | 32.0 | 32.0 | 32.1 | 32.2 | 32.1 |
| Second Liquid | Second Liquid No. | | 6 | 7 | 8 | 9 | 10 | 1 | 1 | 1 |
| | Solid content (mass%) | | 4 | 4 | 4 | 2 | 24 | 4 | 4 | 4 |
| | Static surface tension D (mN/m) | | 20.7 | 31.0 | 31.0 | 31.0 | 31.0 | 31.0 | 31.0 | 31.0 |
| | Viscosity (mPa*s) measured using cone-plate type rotational viscometer | | 7.0 | 5.0 | 3.0 | 1.5 | 30.0 | 7.0 | 7.0 | 7.0 |
| Difference (C - D) in static surface tension | | | 11.3 | 1 | 1 | 1 | 1 | 1.1 | 1.2 | 1.1 |
| Evaluation | Concealing properties | Inkjet method | C | A | A | B | B | Poor discharge | Poor discharge | Poor discharge |
| | | Spray method | - | - | - | - | - | A | A | A |
| | | Brush coating method | - | - | - | - | - | A | A | A |
| | Bleeding | Inkjet method | A | A | A | A | A | Poor discharge | Poor discharge | Poor discharge |
| | | Spray method | - | - | - | - | - | A | A | A |
| | | Brush coating method | - | - | - | - | - | A | A | A |
| | Color unevenness | Inkjet method | A | A | A | A | A | Poor discharge | Poor discharge | Poor discharge |
| | | Spray method | - | - | - | - | - | A | A | B |
| | | Brush coating method | - | - | - | - | - | A | A | A |

Table 7

| | | | Comparative Examples | | |
|---|---|---|---|---|---|
| | | | 1 | 2 | 3 |
| Ink Set No. | | | 19 | 20 | 21 |
| First Liquid | First Liquid No. | | 6 | 7 | 8 |
| | Viscosity (mPa*s) at 25°C and shear rate of 0.1 $s^{-1}$ | | 1,000 | 35 | 100 |
| | Viscosity (mPa*s) at 25°C and shear rate of 1 $s^{-1}$ | | 500 | 27 | 78 |
| | Viscosity (mPa*s) at 25°C and shear rate of 5,000 $s^{-1}$ | | 16 | 11 | 43 |
| | Solid content (mass%) | | 31 | 28 | 35 |
| | Static surface tension C (mN/m) | | 32.0 | 32.1 | 29.9 |
| Second Liquid | Second Liquid No. | | 1 | 1 | 1 |
| | Solid content (mass%) | | 4 | 4 | 4 |
| | Static surface tension D (mN/m) | | 31.0 | 31.0 | 31.0 |
| | Viscosity (mPa*s) measured using cone-plate type rotational viscometer | | 7.0 | 7.0 | 7.0 |
| Difference (C - D) in static surface tension | | | 1 | 1.1 | -1.1 |
| Evaluation | Concealing properties | Inkjet method | D | D | D |
| | | Spray method | - | - | - |
| | | Brush coating method | - | - | - |
| | Bleeding | Inkjet method | C | C | C |
| | | Spray method | - | - | - |
| | | Brush coating method | - | - | - |
| | Color unevenness | Inkjet method | C | C | C |
| | | Spray method | - | - | - |
| | | Brush coating method | - | - | - |

Aspects of the present invention include the following, for example.

According to a first aspect, a printing method includes

depositing, on an object to be coated, a first liquid having a viscosity of $1.00 \times 10^3$ mPa·s or more at a shear rate of 1 $s^{-1}$ at 25°C and a viscosity of $3.50 \times 10^2$ mPa·s or less at a shear rate of 5,000 $s^{-1}$ at 25°C, and

performing printing by discharging a second liquid from a nozzle onto the first liquid deposited on the object to be coated.

According to a second aspect, in the printing method according to the first aspect, the first liquid has a viscosity of $3.00 \times 10^2$ mPa·s or less at a shear rate of 5,000 $s^{-1}$ at 25° C.

According to a third aspect, in the printing method according to the first aspect or the second aspect, the first liquid has a viscosity of $1.30 \times 10^2$ mPa·s or less at a shear rate of 5,000 $s^{-1}$ at 25° C.

According to a fourth aspect, in the printing method according to any one of the first aspect to the third aspect, the first liquid has a viscosity of $3.00 \times 10^3$ mPa·s or more at a shear rate of 1 $s^{-1}$ at 25° C.

According to a fifth aspect, in the printing method according to any one of the first aspect to the fourth aspect, the first liquid has a viscosity of $3.00 \times 10^4$ mPa·s or more at a shear rate of 0.1 $s^{-1}$ at 25° C.

According to a sixth aspect, in the printing method according to any one of the first aspect to the fifth aspect, a static surface tension (C) m/Nm of the first liquid and a static surface tension (D) m/Nm of the second liquid satisfy Expression (1) below.

(Math. 3)

$$C\ (m/Nm) - D\ (m/Nm) \leq 10\ (m/Nm)\ ...\ Expression\ (1)$$

According to a seventh aspect, in the printing method according to any one of the first aspect to the sixth aspect, the static surface tension (C) m/Nm of the first liquid and the static surface tension (D) m/Nm of the second liquid satisfy Expression (2) below.
(Math. 4)

$$C\ (m/Nm) - D\ (m/Nm) \leq 1\ (m/Nm)\ ...\ Expression\ (2)$$

According to an eighth aspect, in the printing method according to any one of the first aspect to the seventh aspect, the second liquid has a viscosity of 3 mPa·s or more and $3.0\times10$ mPa·s or less at a shear rate of 1 $s^{-1}$ at 25° C.
According to a ninth aspect, in the printing method according to any one of the first aspect to the eighth aspect, the first liquid includes a thickener.
According to a tenth aspect, in the printing method according to any one of the first aspect to the ninth aspect, the first liquid has a solid content of 40 mass% or more.
According to an eleventh aspect, in the printing method according to any one of the first aspect to the tenth aspect, the object to be coated includes a porous base material.
According to a twelfth aspect, in the printing method according to any one of the first aspect to the eleventh aspect, at least one of the first liquid and the second liquid is discharged by an inkjet method onto the object to be coated.
According to a thirteenth aspect, a printing apparatus includes

a first unit that deposits, on an object to be coated, a first liquid having a viscosity of $1.00\times10^3$ mPa·s or more at a shear rate of 1 $s^{-1}$ at 25°C and a viscosity of $3.50\times10^2$ mPa·s or less at a shear rate of 5,000 $s^{-1}$ at 25°C, and
a second unit that performs printing by discharging a second liquid from a nozzle onto the first liquid deposited on the object to be coated.

According to a fourteenth aspect, an ink set includes

a first liquid having a viscosity of $1.00\times10^3$ mPa·s or more at a shear rate of 1 $s^{-1}$ at 25°C and a viscosity of $3.50\times10^2$ mPa·s or less at a shear rate of 5,000 $s^{-1}$ at 25°C, and
a second liquid having a viscosity of 3 mPa·s or more and $3.0\times10$ mPa·s or less at a shear rate of 1 $s^{-1}$ at 25°C.

According to a fifteenth aspect, the ink set according to the fourteenth aspect includes
an ink set for printing on a porous object to be coated, which is used for printing on a porous object to be coated.
According to a sixteenth aspect, a method of manufacturing a printed matter includes

forming a first layer including a first liquid having a viscosity of $1.00\times10^3$ mPa·s or more at a shear rate of 1 $s^{-1}$ at 25°C and a viscosity of $3.50\times10^2$ mPa·s or less at a shear rate of 5,000 $s^{-1}$ at 25°C, and
forming a second layer on the first layer, the second layer including a second liquid having a viscosity of 3 mPa·s or more and $3.0\times10$ mPa·s or less at a shear rate of 1 $s^{-1}$ at 25°C.

Any one of the above-described operations may be performed in various other ways, for example, in an order different from the one described above.

## Claims

1. A printing method comprising:

   depositing, on an object to be coated, a first liquid having a viscosity of $1.00\times10^3$ mPa·s or more at a shear rate of 1 $s^{-1}$ at 25°C and a viscosity of $3.50\times10^2$ mPa·s or less at a shear rate of 5,000 $s^{-1}$ at 25°C; and
   performing printing by discharging a second liquid from a nozzle onto the first liquid deposited on the object to be coated.

2. The printing method according to claim 1, wherein the first liquid has a viscosity of $3.00\times10^2$ mPa·s or less at a shear rate of 5,000 $s^{-1}$ at 25° C.

3. The printing method according to claim 1 or 2, wherein the first liquid has a viscosity of $3.00\times10^3$ mPa·s or more at a shear rate of 1 $s^{-1}$ at 25° C.

4. The printing method according to any one of claims 1 to 3, wherein the first liquid has a viscosity of $3.00\times10^4$ mPa·s or more at a shear rate of 0.1 $s^{-1}$ at 25° C.

5. The printing method according to any one of claims 1 to 4, wherein a static surface tension (C) m/Nm of the first liquid and a static surface tension (D) m/Nm of the second liquid satisfy Expression (1) below:

$$C\ (m/Nm) - D\ (m/Nm) \leq 10\ (m/Nm)\ ...\ \text{Expression (1)}.$$

...

6. The printing method according to any one of claims 1 to 5, wherein the second liquid has a viscosity of 3 mPa·s or more and $3.0\times10$ mPa·s or less at a shear rate of 1 $s^{-1}$ at 25° C.

7. The printing method according to any one of claims 1 to 6, wherein the first liquid has a solid content of 40 mass% or more.

8. The printing method according to any one of claims 1 to 7, wherein the object to be coated includes a porous base material.

9. The printing method according to any one of claims 1 to 8, wherein at least one of the first liquid and the second liquid is discharged by an inkjet method onto the object to be coated.

10. An ink set comprising:

a first liquid having a viscosity of $1.00\times10^3$ mPa·s or more at a shear rate of 1 $s^{-1}$ at 25°C and a viscosity of $3.50\times10^2$ mPa·s or less at a shear rate of 5,000 $s^{-1}$ at 25°C; and
a second liquid having a viscosity of 3 mPa·s or more and $3.0\times10$ mPa·s or less at a shear rate of 1 $s^{-1}$ at 25°C.

11. A method of manufacturing a printed matter, the method comprising:

forming a first layer including a first liquid having a viscosity of $1.00\times10^3$ mPa·s or more at a shear rate of 1 $s^{-1}$ at 25°C and a viscosity of $3.50\times10^2$ mPa·s or less at a shear rate of 5,000 $s^{-1}$ at 25°C; and
forming a second layer on the first layer, the second layer including a second liquid having a viscosity of 3 mPa·s or more and $3.0\times10$ mPa·s or less at a shear rate of 1 $s^{-1}$ at 25°C.

FIG. 1

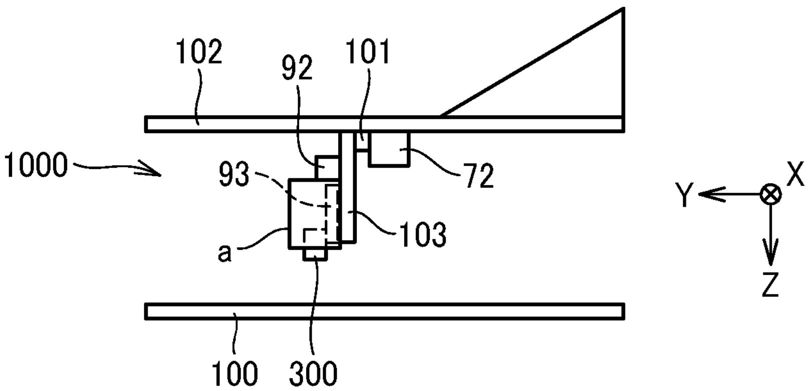
102
92
101
1000
93
72
X
Y
a
103
Z
100
300

FIG. 2

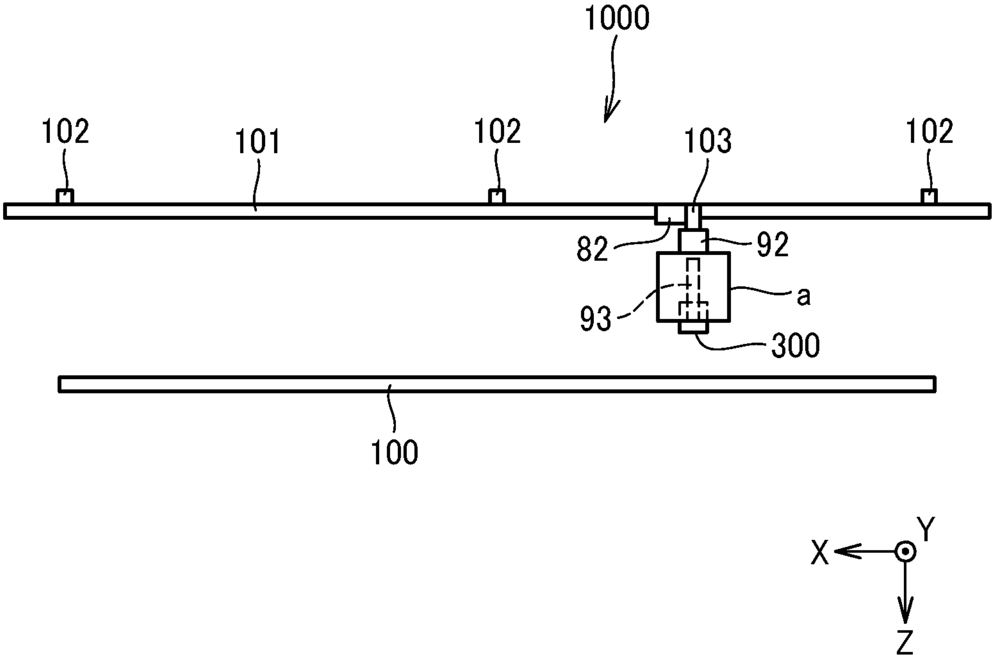
1000
102
101
102
103
102
82
92
93
a
300
100
X
Y
Z

FIG. 3

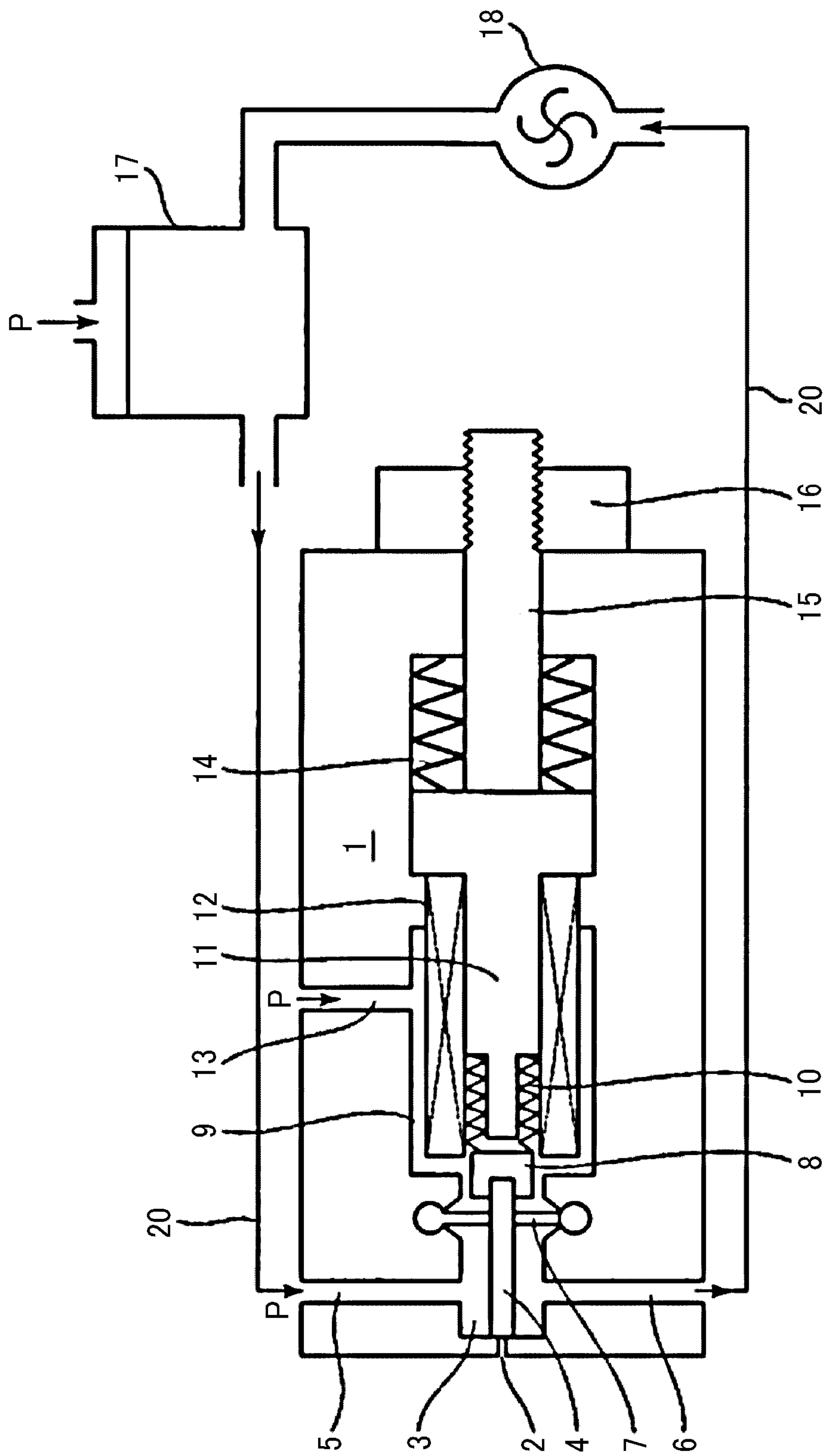

FIG. 4

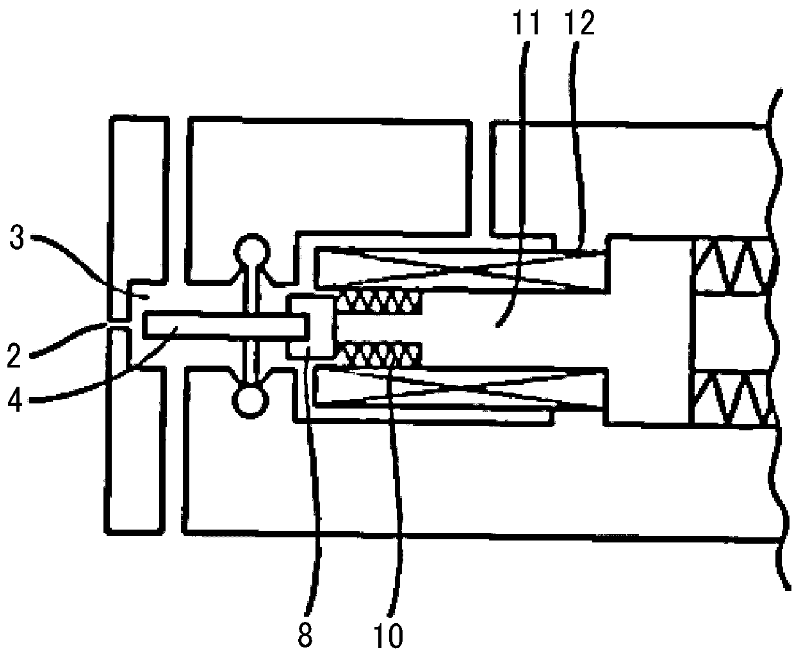

Europäisches Patentamt
European Patent Office
Office européen des brevets

# EUROPEAN SEARCH REPORT

Application Number
EP 25 15 9855

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/174917 A1 (ADAMIC RAYMOND [US] ET AL) 22 June 2017 (2017-06-22)<br>* the whole document *<br>* especially examples 1 and 2 in paragraphs 49-52 and paragraph 14 *<br>----- | 1-11 | INV.<br>B41M1/26<br>B41M3/00<br>B41M5/00<br>C09D11/00 |
| X | US 2022/258517 A1 (USUI YUUMA [JP] ET AL) 18 August 2022 (2022-08-18)<br>* the whole document *<br>* especially example 1 in paragraphs 154-180, examples 2, 16, 17, 18 and paragraphs 41-54, 72, 100-101 *<br>----- | 1-11 | ADD.<br>B41M1/18 |
| A | US 10 759 205 B2 (TARKETT GDL SA [LU]) 1 September 2020 (2020-09-01)<br>* the whole document *<br>* especially examples 1 and 2 *<br>----- | 1-11 | |
| | | | TECHNICAL FIELDS SEARCHED (IPC) |
| | | | B41M<br>C09D |

The present search report has been drawn up for all claims

1

| Place of search | Date of completion of the search | Examiner |
|---|---|---|
| Munich | 8 July 2025 | Vogel, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 15 9855

This annex lists the patent family members relating to the patent documents cited in the above-mentioned European search report. The members are as contained in the European Patent Office EDP file on
The European Patent Office is in no way liable for these particulars which are merely given for the purpose of information.

08-07-2025

| Patent document cited in search report | Publication date | Patent family member(s) | Publication date |
|---|---|---|---|
| US 2017174917 A1 | 22-06-2017 | US 2017174917 A1 | 22-06-2017 |
| | | WO 2015134027 A1 | 11-09-2015 |
| US 2022258517 A1 | 18-08-2022 | CN 114206627 A | 18-03-2022 |
| | | EP 4003743 A1 | 01-06-2022 |
| | | US 2022258517 A1 | 18-08-2022 |
| | | WO 2021014763 A1 | 28-01-2021 |
| US 10759205 B2 | 01-09-2020 | CN 107428188 A | 01-12-2017 |
| | | EP 3271188 A1 | 24-01-2018 |
| | | HU E052341 T2 | 28-04-2021 |
| | | RU 2017134153 A | 16-04-2019 |
| | | SI 3271188 T1 | 29-01-2021 |
| | | UA 120713 C2 | 27-01-2020 |
| | | US 2018099519 A1 | 12-04-2018 |
| | | WO 2016146565 A1 | 22-09-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5337351 B
- JP 4123897 B